(19) Europäisches Patentamt
European Patent Office
Office européen des brevets

(11) **EP 4 645 290 A1**

(12) **EUROPEAN PATENT APPLICATION**
published in accordance with Art. 153(4) EPC

(43) Date of publication:
**05.11.2025   Bulletin 2025/45**

(51) International Patent Classification (IPC):
***G09F 9/302*** (2006.01)   ***B60K 35/23*** (2024.01)
***G02B 27/01*** (2006.01)   ***G09F 9/00*** (2006.01)
***G09F 9/33*** (2006.01)

(21) Application number: 23912321.9

(22) Date of filing: 28.12.2023

(52) Cooperative Patent Classification (CPC):
**G09G 3/32; B60K 35/23; G02B 27/01; G09F 9/00;
G09F 9/302; G09F 9/33; G09G 3/002;**
G09G 2300/026; G09G 2320/041; G09G 2330/026;
G09G 2330/045; G09G 2380/10

(86) International application number:
**PCT/JP2023/047289**

(87) International publication number:
**WO 2024/143544 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   28.12.2022   JP 2022212774

(71) Applicant: Sony Group Corporation
Tokyo 108-0075 (JP)

(72) Inventors:
• **DEWA, Shigekuni**
  **Tokyo 108-0075 (JP)**
• **NAGATA, Koji**
  **Tokyo 108-0075 (JP)**
• **SAITOH, Takashi**
  **Tokyo 108-0075 (JP)**

(74) Representative: **Witte, Weller & Partner
Patentanwälte mbB
Postfach 10 54 62
70047 Stuttgart (DE)**

(54) **DISPLAY DEVICE AND DISPLAY SYSTEM**

(57)   A display apparatus according to an embodiment of the present disclosure includes a first display block and a second display block. The first display block includes a plurality of light-emitting elements provided to be arrayed in a first direction and a second direction intersecting the first direction. The second display block includes a plurality of light-emitting elements provided to be arrayed in the first direction and the second direction. The first display block and the second display block are arranged adjacent to each other in the first direction, and are shifted from each other by a predetermined amount in the second direction.

[ FIG. 4A ]

## Description

Technical Field

The present disclosure relates to a display apparatus and a display system.

Background Art

A display apparatus has been proposed in which a plurality of display elements is non-uniformly arranged to display a target image (PTL 1).

Citation List

Patent Literature

PTL 1: International Publication No. WO2022/130863

Summary of the Invention

It is desired for a display apparatus to have improved performance.

It is desirable to provide a display apparatus having favorable performance.

A display apparatus according to an embodiment of the present disclosure includes a first display block and a second display block. The first display block includes a plurality of light-emitting elements provided to be arrayed in a first direction and a second direction intersecting the first direction. The second display block includes a plurality of light-emitting elements provided to be arrayed in the first direction and the second direction. The first display block and the second display block are arranged adjacent to each other in the first direction, and are shifted from each other by a predetermined amount in the second direction.

A display system according to an embodiment of the present disclosure includes a display apparatus and a reflective member that reflects light from the display apparatus. The display apparatus includes a first display block and a second display block. The first display block includes a plurality of light-emitting elements provided to be arrayed in a first direction and a second direction intersecting the first direction. The second display block includes a plurality of light-emitting elements provided to be arrayed in the first direction and the second direction. The first display block and the second display block are arranged adjacent to each other in the first direction, and are shifted from each other by a predetermined amount in the second direction.

Brief Description of the Drawings

[FIG. 1] FIG. 1 is an explanatory diagram of a configuration example of a display system according to an embodiment of the present disclosure.

[FIG. 2] FIG. 2 is an explanatory diagram of a configuration example of the display system according to an embodiment of the present disclosure.

[FIG. 3] FIG. 3 is a block diagram illustrating a configuration example of a display apparatus according to an embodiment of the present disclosure.

[FIG. 4A] FIG. 4A is a diagram illustrating a configuration example of the display apparatus according to an embodiment of the present disclosure.

[FIG. 4B] FIG. 4B is a diagram illustrating a configuration example of the display apparatus according to an embodiment of the present disclosure.

[FIG. 5A] FIG. 5A is a diagram illustrating a configuration example of a display block of the display apparatus according to an embodiment of the present disclosure.

[FIG. 5B] FIG. 5B is a diagram illustrating a configuration example of the display block of the display apparatus according to an embodiment of the present disclosure.

[FIG. 6A] FIG. 6A is a diagram illustrating an arrangement example of light-emitting elements of the display apparatus according to an embodiment of the present disclosure.

[FIG. 6B] FIG. 6B is a diagram illustrating an arrangement example of the light-emitting elements of the display apparatus according to an embodiment of the present disclosure.

[FIG. 6C] FIG. 6C is a diagram illustrating an arrangement example of the light-emitting elements of the display apparatus according to an embodiment of the present disclosure.

[FIG. 6D] FIG. 6D is a diagram illustrating an arrangement example of the light-emitting elements of the display apparatus according to an embodiment of the present disclosure.

[FIG. 6E] FIG. 6E is a diagram illustrating an arrangement example of the light-emitting elements of the display apparatus according to an embodiment of the present disclosure.

[FIG. 6F] FIG. 6F is a diagram illustrating an arrangement example of the light-emitting elements of the display apparatus according to an embodiment of the present disclosure.

[FIG. 6G] FIG. 6G is a diagram illustrating an arrangement example of the light-emitting elements of the display apparatus according to an embodiment of the present disclosure.

[FIG. 6H] FIG. 6H is an explanatory diagram of a configuration example of the display apparatus according to an embodiment of the present disclosure.

[FIG. 6I] FIG. 6I is an explanatory diagram of a configuration example of the display apparatus according to an embodiment of the present disclosure.

[FIG. 7A] FIG. 7A is a diagram illustrating a configuration example of the display apparatus according to an embodiment of the present disclosure.

[FIG. 7B] FIG. 7B is a diagram illustrating a configuration example of the display apparatus according to an embodiment of the present disclosure.

[FIG. 7C] FIG. 7C is a diagram illustrating a configuration example of the display apparatus according to an embodiment of the present disclosure.

[FIG. 8A] FIG. 8A is an explanatory diagram of an arrangement example of display blocks of the display apparatus according to an embodiment of the present disclosure.

[FIG. 8B] FIG. 8B is an explanatory diagram of an arrangement example of the display blocks of the display apparatus according to an embodiment of the present disclosure.

[FIG. 9A] FIG. 9A is an explanatory diagram of an arrangement example of display blocks of a display apparatus according to a comparative example of the present disclosure.

[FIG. 9B] FIG. 9B is an explanatory diagram of an arrangement example of the display blocks of the display apparatus according to the comparative example of the present disclosure.

[FIG. 10] FIG. 10 is an explanatory diagram of an example of a cross-sectional configuration of pixels of the display apparatus according to an embodiment of the present disclosure.

[FIG. 11] FIG. 11 is a diagram illustrating an example of a light emission luminance of a pixel of the display apparatus according to an embodiment of the present disclosure.

[FIG. 12] FIG. 12 is an explanatory diagram of an example of the light emission luminance of the pixel of the display apparatus according to an embodiment of the present disclosure.

[FIG. 13] FIG. 13 is an explanatory diagram of another example of the cross-sectional configuration of pixels of the display apparatus according to an embodiment of the present disclosure.

[FIG. 14] FIG. 14 is a diagram illustrating another example of the light emission luminance of the pixel of the display apparatus according to an embodiment of the present disclosure.

[FIG. 15] FIG. 15 is an explanatory diagram of another example of the light emission luminance of the pixel of the display apparatus according to an embodiment of the present disclosure.

[FIG. 16A] FIG. 16A is an explanatory diagram of another example of the cross-sectional configuration of the pixel of the display apparatus according to an embodiment of the present disclosure.

[FIG. 16B] FIG. 16B is an explanatory diagram of another example of the cross-sectional configuration of the pixel of the display apparatus according to an embodiment of the present disclosure.

[FIG. 16C] FIG. 16C is an explanatory diagram of another example of the cross-sectional configuration of the pixel of the display apparatus according to an embodiment of the present disclosure.

[FIG. 16D] FIG. 16D is an explanatory diagram of another example of the cross-sectional configuration of the pixel of the display apparatus according to an embodiment of the present disclosure.

[FIG. 17] FIG. 17 is an explanatory diagram of a configuration example of a control unit of the display apparatus according to an embodiment of the present disclosure.

[FIG. 18A] FIG. 18A is an explanatory diagram of a relationship between an input data and a current supplied to the light-emitting element of the display apparatus according to an embodiment of the present disclosure.

[FIG. 18B] FIG. 18B is an explanatory diagram of setting tables of the display apparatus according to an embodiment of the present disclosure.

[FIG. 19] FIG. 19 is a flowchart illustrating an operation example of the display system according to an embodiment of the present disclosure.

[FIG. 20] FIG. 20 is a diagram illustrating an arrangement example of sensors of the display apparatus according to an embodiment of the present disclosure.

[FIG. 21A] FIG. 21A is an explanatory diagram of an example of image control performed by the display apparatus according to an embodiment of the present disclosure.

[FIG. 21B] FIG. 21B is an explanatory diagram of an example of the image control performed by the display apparatus according to an embodiment of the present disclosure.

[FIG. 22A] FIG. 22A is an explanatory diagram of an example of the image control performed by the display apparatus according to an embodiment of the present disclosure.

[FIG. 22B] FIG. 22B is an explanatory diagram of an example of the image control performed by the display apparatus according to an embodiment of the present disclosure.

[FIG. 22C] FIG. 22C is an explanatory diagram of an example of the image control performed by the display apparatus according to an embodiment of the present disclosure.

[FIG. 23] FIG. 23 is an explanatory diagram of an arrangement example of the sensor of the display apparatus according to an embodiment of the present disclosure.

[FIG. 24] FIG. 24 is a diagram illustrating an example of a state transition of a drive section of the display apparatus according to an embodiment of the present disclosure.

[FIG. 25A] FIG. 25A is an explanatory diagram of a configuration example of a display system according to Modification Example 1 of the present disclosure.

[FIG. 25B] FIG. 25B is an explanatory diagram of a configuration example of the display system according to Modification Example 1 of the present disclosure.

[FIG. 26A] FIG. 26A is an explanatory diagram of a behavior of the display system illustrated in FIG. 1.

[FIG. 26B] FIG. 26B is an explanatory diagram of the behavior of the display system illustrated in FIG. 1.

[FIG. 27A] FIG. 27A is an explanatory diagram of a configuration example of a display system according to Modification Example 2 of the present disclosure.

[FIG. 27B] FIG. 27B is an explanatory diagram of a configuration example of the display system according to Modification Example 2 of the present disclosure.

[FIG. 28] FIG. 28 is an explanatory diagram of a configuration example of a display apparatus according to Modification Example 3 of the present disclosure.

[FIG. 29] FIG. 29 is an explanatory diagram of a configuration example of the display apparatus according to Modification Example 3 of the present disclosure.

[FIG. 30] FIG. 30 is an explanatory diagram of a configuration example of the display apparatus according to Modification Example 3 of the present disclosure.

[FIG. 31] FIG. 31 is an explanatory diagram of a configuration example of a display apparatus according to Modification Example 4 of the present disclosure.

[FIG. 32] FIG. 32 is an explanatory diagram of a configuration example of the display apparatus according to Modification Example 4 of the present disclosure.

[FIG. 33] FIG. 33 is an explanatory diagram of a configuration example of the display apparatus according to Modification Example 4 of the present disclosure.

[FIG. 34] FIG. 34 is an explanatory diagram of a configuration example of the display apparatus according to Modification Example 4 of the present disclosure.

[FIG. 35] FIG. 35 is an explanatory diagram of an operation example of a display apparatus according to Modification Example 5 of the present disclosure.

[FIG. 36A] FIG. 36A is an explanatory diagram of an operation example of the display apparatus according to Modification Example 5 of the present disclosure.

[FIG. 36B] FIG. 36B is an explanatory diagram of an operation example of the display apparatus according to Modification Example 5 of the present disclosure.

[FIG. 37A] FIG. 37A is an explanatory diagram of an operation example of a display apparatus according to Modification Example 6 of the present disclosure.

[FIG. 37B] FIG. 37B is an explanatory diagram of an operation example of the display apparatus according to Modification Example 6 of the present disclosure.

[FIG. 37C] FIG. 37C is an explanatory diagram of an operation example of the display apparatus according to Modification Example 6 of the present disclosure.

[FIG. 38] FIG. 38 is a flowchart illustrating an operation example of a display system according to Modification Example 6 according to Modification Example 6 of the present disclosure.

[FIG. 39A] FIG. 39A is an explanatory diagram of another operation example of the display apparatus according to Modification Example 6 of the present disclosure.

[FIG. 39B] FIG. 39B is an explanatory diagram of another operation example of the display apparatus according to Modification Example 6 of the present disclosure.

[FIG. 40A] FIG. 40A is an explanatory diagram of another operation example of the display apparatus according to Modification Example 6 of the present disclosure.

[FIG. 40B] FIG. 40B is an explanatory diagram of another operation example of the display apparatus according to Modification Example 6 of the present disclosure.

[FIG. 41] FIG. 41 is a flowchart illustrating an operation example of the display system according to Modification Example 6 according to Modification Example 6 of the present disclosure.

[FIG. 42] FIG. 42 is a block diagram depicting an example of schematic configuration of a vehicle control system.

[FIG. 43] FIG. 43 is a diagram of assistance in explaining an example of installation positions of an outside-vehicle information detecting section and an imaging section. Modes for Carrying Out the Invention

Hereinafter, description is given in detail of an embodiment of the present disclosure with reference to the drawings. It is to be noted that the description is given in the following order.

1. Embodiment
2. Modification Examples
3. Practical Application Example

<1. Embodiment>

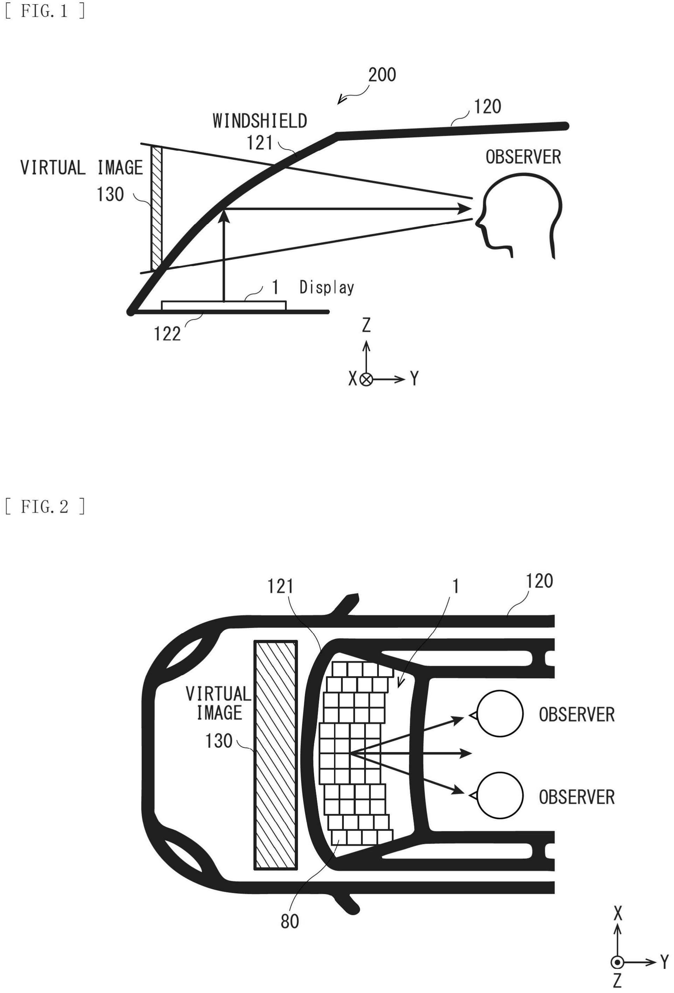

FIGs. 1 and 2 are each an explanatory diagram of a configuration example of a display system according to an embodiment of the present disclosure. A display system 200 includes a display apparatus 1 and a reflective member 121. The display apparatus 1 includes a plurality of pixels P each including a light-emitting element 10, and is configured to be able to display an image. The light-emitting element 10 is, for example, an LED (Light Emitting Diode). In the display apparatus 1, a plurality of light-emitting elements 10 is arranged in matrix.

In the display system 200, a reflecting mirror or a magnifying glass is not provided between the display apparatus 1 and the reflective member 121. Accordingly, light from the display apparatus 1 is directly emitted to the reflective member 121 without passing through the reflecting mirror or the magnifying glass.

In the example illustrated in FIG. 1, the plurality of light-emitting elements 10 is two-dimensionally arranged in an X-Y direction illustrated in FIG. 1. It is to be noted that, as illustrated in FIG. 1, a right-left direction on the sheet orthogonal to an X-axis direction is defined as a Y-axis direction, and a direction orthogonal to the X-axis direction and the Y-axis direction is defined as a Z-axis direction. In the following drawings, the arrow directions in FIG. 1 may be used, in some cases, as a standard to express a direction.

The display apparatus 1 may cause the light-emitting element 10 to generate light and irradiate light to the outside. The display apparatus 1 may control light emission of the light-emitting elements 10 of each of the pixels P to thereby display an image (e.g., a color image). The display apparatus 1 may emit light to display the image to the reflective member 121. The display apparatus 1 can also be referred to as a light source (light source unit) that is able to output light to display the image.

The reflective member 121 is a member that reflects light from the display apparatus 1. In the example illustrated in FIG. 1, the reflective member 121 is a windshield (also referred to as a front glass, front window, etc.) of a vehicle 120. The reflective member 121 reflects a portion of light incident from the display apparatus 1 toward a side of a user (observer).

Image light projected (projected) by the display apparatus 1 is guided toward eyes of the user by the reflective member 121. The reflective member 121 may reflect the light emitted from the display apparatus 1 to the side of the user to form a virtual image 130 of the image displayed by the display apparatus 1.

In the display system 200, as described above, the reflective member 121 displays, as the virtual image 130, the images displayed on the display apparatus 1. It is possible, for an occupant (driver, passenger) who is the user, to visually recognize an image projected by the display apparatus 1 onto the reflective member 121, as the virtual image 130 ahead of the windshield that is the reflective member 121. The display apparatus 1 (or the display system 200) can also be referred to as a display apparatus (or display system) that displays (projects) an image using the reflective member 121 as a screen (a member on which projection is performed).

The user may perform observation by superposing a real image in a field of view ahead of the vehicle 120 (vehicle body) and an image (virtual image 130) displayed by the display system 200 on each other. For example, the display system 200 displays various types of driving assistance information by superimposing such information on a scene (landscape) outside the vehicle. The display system 200 may cause the display apparatus 1 and the reflective member 121 to present, to the user, an image indicating a vehicle speed, fuel, navigation information, weather, temperature, time, various types of warning information, or the like.

The display apparatus 1 (or the display system 200) according to the present embodiment is applicable as a head-up display (HUD: Head-Up Display). The display apparatus 1 and the reflective member 121 can also be referred to collectively as a head-up display. The display system 200 including the display apparatus 1 and the reflective member 121 can also be referred to as a head-up display system.

The display apparatus 1 according to the present embodiment is provided to follow a curved surface of the windshield that is the reflective member 121. The display apparatus 1 has a shape corresponding to a shape of the curved windshield. In the example illustrated in FIG. 2, the display apparatus 1 is provided by arranging a plurality of display blocks 80 described later along a side of the windshield that is the reflective member 121 having a predetermined curvature (curvature radius).

The display apparatus 1 is provided on a dashboard 122 of the vehicle 120 or in the dashboard 122 to allow light from the display apparatus 1 to be emitted to an area from one side to the other side (substantially upper end to substantially lower end, or substantially left end to substantially right end) of the reflective member 121, i.e., the windshield. That is, the display apparatus 1 is provided across an area from one end to the other end (substantially upper end to substantially lower end, or substantially left end to substantially right end) of the dashboard 122.

In addition, the display apparatus 1 may be provided on the entire surface of the dashboard 122 to allow the light from the display apparatus 1 to be emitted to the entire surface of the windshield. In addition, the display apparatus 1 may be installed to be embedded in the dashboard 122. The display apparatus 1 may be provided across the entire dashboard 122 between A pillars on the right and the left in a vehicle-width direction.

Providing the display apparatus 1 as illustrated in FIG. 2 makes it possible to achieve a larger screen and higher luminance. It is possible to arrange the display apparatus 1 up to the base (root) of the windshield, thus making it possible to widen (increase) a display range of an image.

[Block Configuration Display Apparatus]

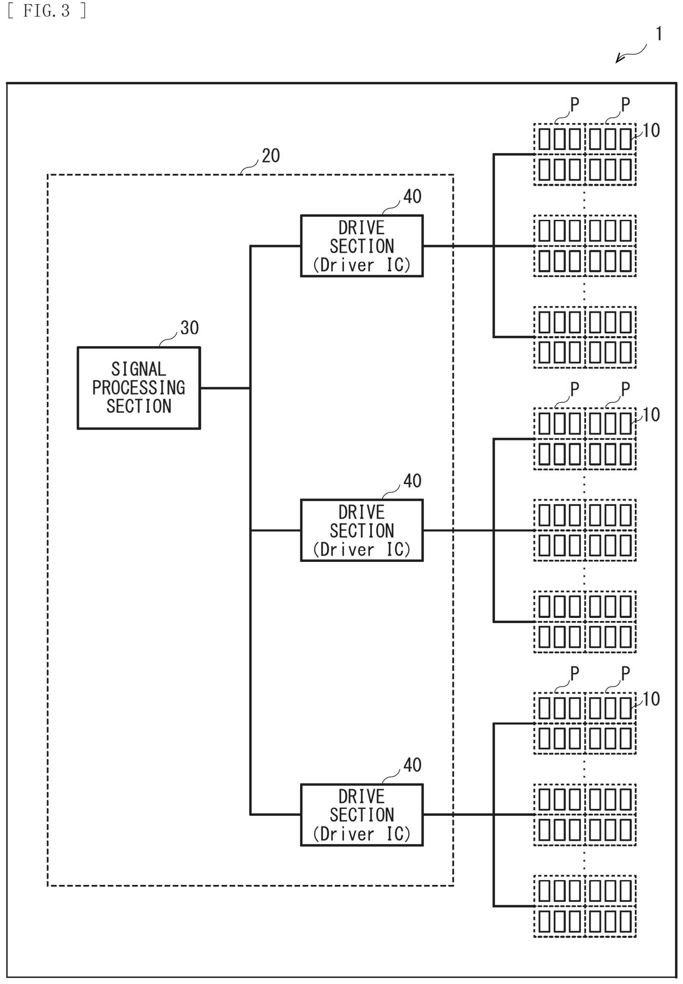

FIG. 3 is a block diagram illustrating a configuration example of the display apparatus according to the embodiment. The display apparatus 1 includes the plurality of pixels P having the light-emitting element 10 and a control unit 20. The control unit 20 is a control circuit, and is configured to be able to control each section of the display apparatus 1. In the example illustrated in FIG. 3, the control unit 20 includes a signal processing section 30 and a plurality of drive sections 40. It is to be noted that image data is inputted from an image data storage to the control unit 20, although no illustration is given here. The image data storage that stores (memorizes) image data (picture signal) may be provided outside the display apparatus 1, or may be provided inside the display apparatus 1.

The signal processing section 30 is a signal processing circuit, and is configured to be able to execute signal processing (information processing). The signal processing section 30 includes, for example, a processor and a memory (such as a ROM or a RAM), and is configured to perform various types of signal processing. The signal processing section 30 may read and execute a program incorporated therein, and perform signal processing (information processing).

The signal processing section 30 receives, for example, a clock supplied from the outside and data or the like to command an operation mode, and controls each section of the control unit 20. The signal processing section 30 is configured to be able to control the plurality of drive sections 40. The signal processing section 30 supplies the drive section 40 with a signal to control the drive section 40, thus controlling an operation of the drive section 40.

The signal processing section 30 may generate a signal related to brightness (luminance) of light emitted by the light-emitting elements 10 of the pixel P, and output the signal to the drive section 40. For example, the signal processing section 30 transmits, to each of the drive sections 40, a signal related to magnitude of a current to be supplied to the light-emitting elements 10 of each of the pixels P. It is to be noted that the signal processing section 30 may be provided for every plurality of drive sections 40, i.e., for every predetermined number of the drive sections 40.

The drive section 40 is configured to drive the light-emitting elements 10 of the pixel P. The drive section 40 is a drive circuit, and may control an operation of the pixel P. For example, the drive section 40 is configured to be able to control a voltage and a current to the light-emitting elements 10 of each of the pixels P. The drive section 40 is configured by a plurality of circuits including, for example, a digital circuit part that is able to execute digital signal processing, a DA conversion part (DAC: Digital to Analog Converter), an amplifier circuit, and the like.

As schematically illustrated in FIG. 3, for example, the drive section 40 is provided for every plurality of pixels P (every predetermined number of the pixels P). The drive section 40 may supply a voltage and a current for driving the light-emitting elements 10 of the pixel P to the light-emitting elements 10 of the pixel P coupled to the drive section 40 to control light emission performed by the light-emitting elements 10 of the pixel P. The drive section 40 can be referred to as a driver IC (driver circuit).

[Configuration of Display Apparatus]

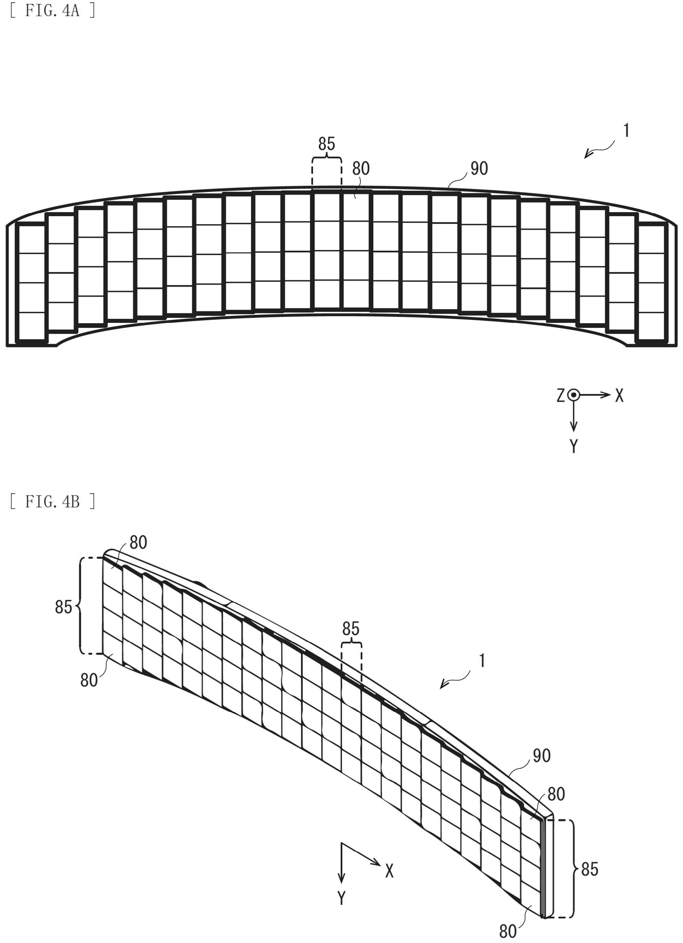

FIGs. 4A and 4B are each a diagram illustrating a configuration example of the display apparatus according to the embodiment. The display apparatus 1 includes a support member 90, as illustrated in FIGs. 4A and 4B. The support member 90 may be formed to follow a curved surface of the reflective member 121 (e.g., windshield). The support member 90 may be designed using information on the curved surface of the reflective member 121 (e.g., windshield). The information on the curved surface of the reflective member 121 may be, for example, a curvature of a side of a lower part of the reflective member 121 (e.g., windshield), or may be a curvature of a side of an upper part of the reflective member 121. In addition, an average value of the curvatures of the reflective member 121 (e.g., windshield) may be used.

In the support member 90, a plurality of support members 85 having a shape extending in the Y-axis direction is arranged to be arrayed in the X-axis direction. In FIG. 4A, the support member 85 is indicated by a thick line. The plurality of support members 85 is arranged on the support member 90 to follow the curved surface of the reflective member 121 (e.g., windshield). The information on the curved surface of the reflective member 121 (e.g., windshield) may be used to determine the arrangement of the plurality of support members 85. The information on the curved surface may be, for example, a curvature of the side of the lower part of the reflective member 121 (e.g., windshield), or may be a curvature of the side of the upper part. In addition, an average value of the curvatures of the reflective member 121 (e.g., windshield) may be used. In addition, the plurality of support members 85 may be arranged to adapt to a shape of a side of the support member 90 on a side of the reflective member 121.

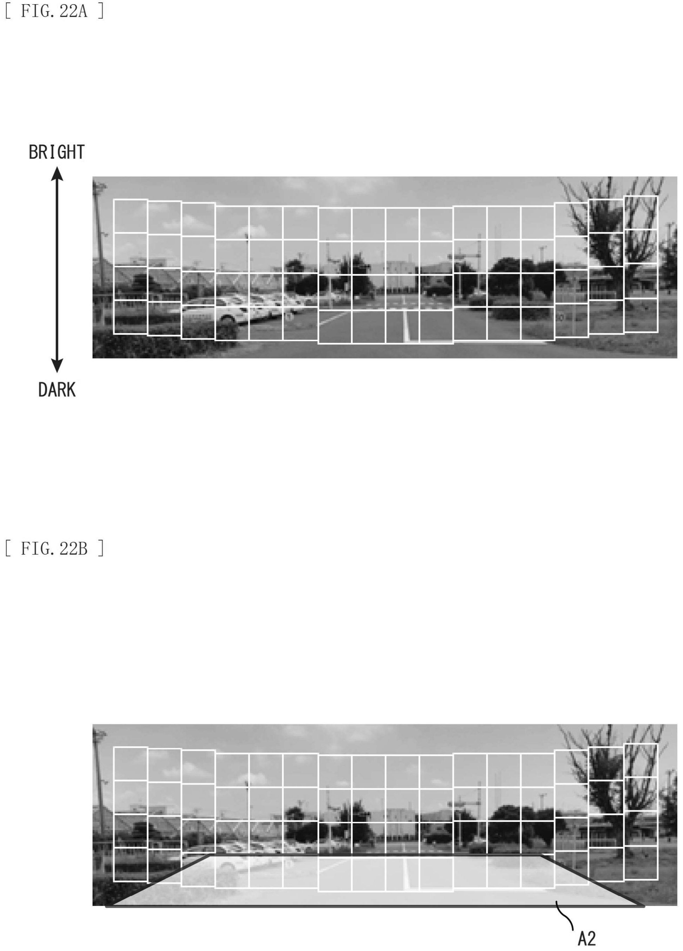

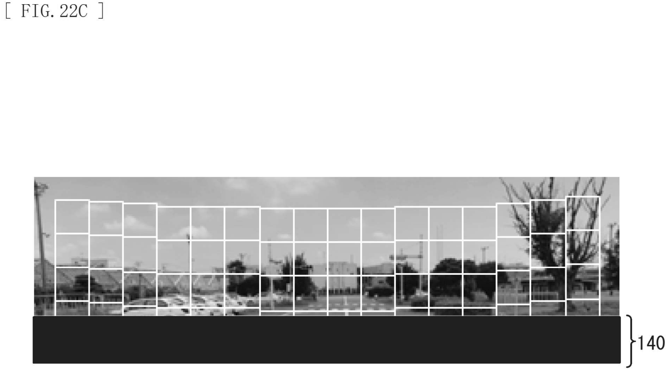

In the example illustrated in FIGs. 4A and 4B, 22 support members 85 are attached to the support member 90. The support member 90 is a main frame, and the support member 85 is a sub frame. The support member 90 and the support member 85 are each formed using a metal material (e.g., aluminum). It is to be noted that the support members 90 and 85 may be configured by a metal material other than aluminum, or may be configured using another material.

The display block 80 that is a block including the plurality of pixels P is arranged in each of the support members 85. In the support member 85, the plurality of display blocks 80 is arranged that arrays in a vertical direction (column direction). The display block 80 can also be referred to as a display unit. In addition, an element including the support member 85 and the plurality of display blocks 80 (display units) is referred to as a display module.

The plurality of display blocks 80 may be positioned in a longitudinal direction (a front-rear direction of the vehicle 120; in the Y-axis direction in FIGs. 4A and 4B), and arranged at equal intervals, in the support member 85 which is the sub frame. As an example, four display blocks 80 arrayed in a row are attached to the support member 85, as illustrated in FIGs. 4A and 4B. The display block 80 has a rectangular shape. The display block 80 may have a rectangle (vertically long or horizontally long) shape, or may have a square shape.

In the support member 90, which is the main frame, the support members 85 each provided with four display blocks 80 are arranged continuously in the X-axis direction. It is to be noted that the numbers and arrangements of the display block 80, the support member 85, the support member 90, and the like are not limited to the illustrated example, and are changeable as appropriate. For example, the display blocks 80 and the support members 85 may not be continuous in the X-axis direction. The display blocks 80 and the support members 85 may be arranged at both ends of the support member 90 in the X-axis direction, and may not be disposed at a middle part of the support member 90.

[Configuration of Display Block]

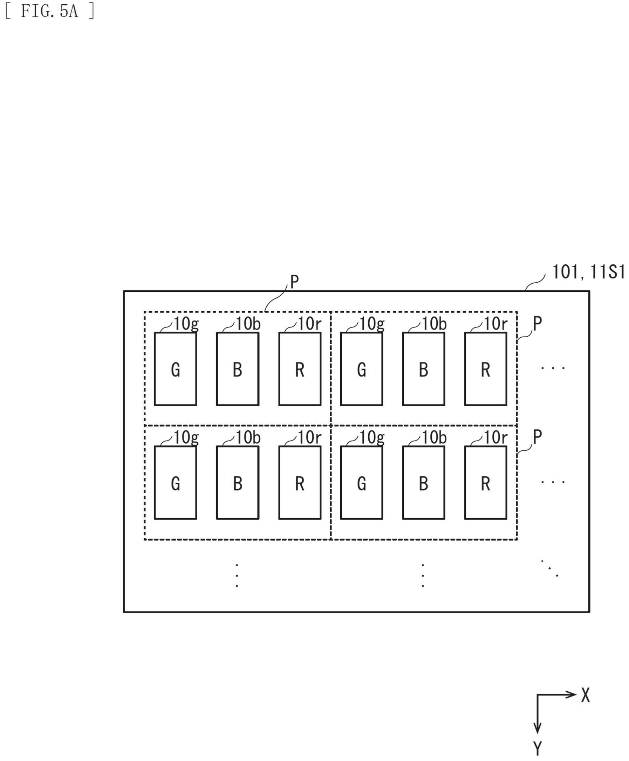

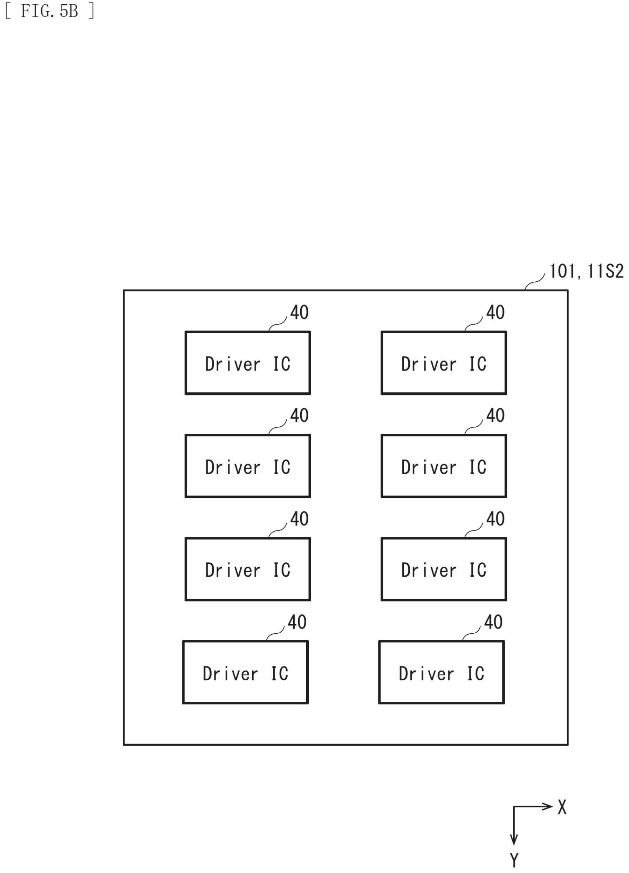

FIGs. 5A and 5B are each a diagram illustrating a configuration example of the display block of the display apparatus according to the embodiment. The display block 80 is configured using a first substrate 101. The first substrate 101 is configured by, for example, a print circuit substrate (PCB: printed circuit board). For example, a material having a lower coefficient of thermal expansion is used for the first substrate 101.

FIG. 5A illustrates a configuration example the first substrate 101, of the display block 80, on a side of a front surface, i.e., on a side of a first surface 11S1. FIG. 5B illustrates a configuration example the first substrate 101, of the display block 80, on a side of a back surface, or on a side of a second surface 11S2. The plurality of pixels P is provided on the side of the front surface of the first substrate 101, and the light-emitting elements 10 of each of the pixels P are arranged in matrix.

The plurality of drive sections 40 is arranged on the side of the back surface of the first substrate 101. The drive section 40 is arranged on the back surface of the first substrate 101 for every plurality of pixels P (for every predetermined number of the pixels P). It is to be noted that the numbers and arrangements of the drive sections 40 are not limited to the illustrated example, and are changeable as appropriate.

In the example illustrated in FIG. 5A, the pixel P of the display apparatus 1 includes a green LED which is a light-emitting element 10g that is able to emit green (G) light, a blue LED which is a light-emitting element 10b that is able to emit blue (B) light, and a red LED which is a light-emitting element 10r that is able to emit red (R) light.

The light-emitting element 10g is controlled by the drive section 40, and is configured to be able to output light of a green wavelength region. The light-emitting element 10b is controlled by the drive section 40, and is configured to be able to output light of a blue wavelength region. In addition, the light-emitting element 10r is controlled by the drive section 40, and is configured to be able to output light of a red wavelength region. The plurality of pixels P of the display apparatus 1 each includes LEDs of three colors of RGB.

In each of the display blocks 80 of the display apparatus 1, a plurality of light-emitting elements 10r, a plurality of light-emitting elements 10g, and a plurality of light-emitting elements 10b are repeatedly arranged, as in the example illustrated in FIG. 5A. The light-emitting elements 10 of each of the pixels P are arranged to be in an RGB arrangement, for example. The display apparatus 1 may control light emission of the LEDs of three colors of each of the pixels P to thereby display a color image (picture).

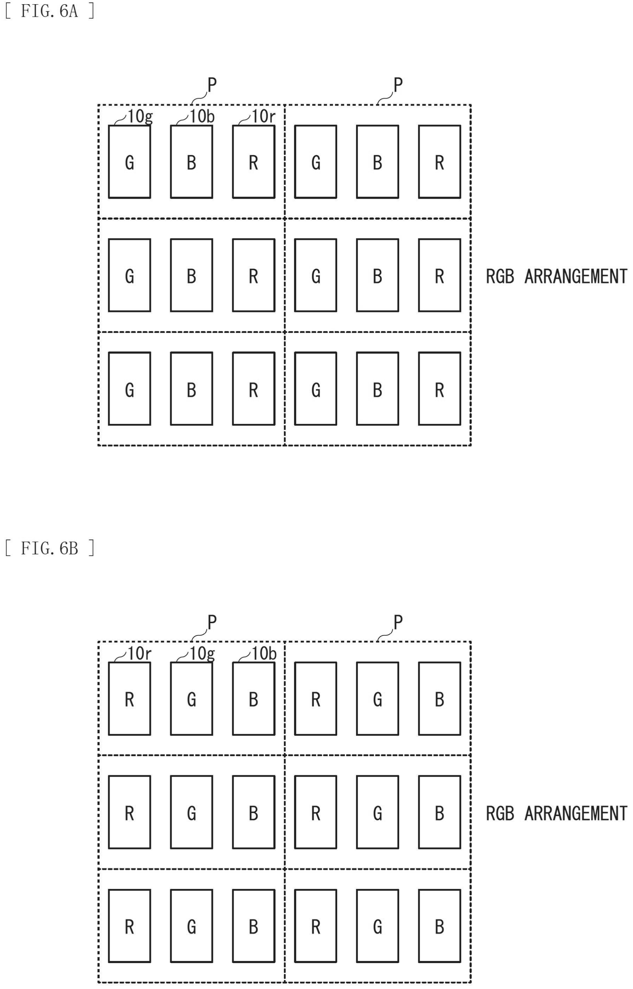

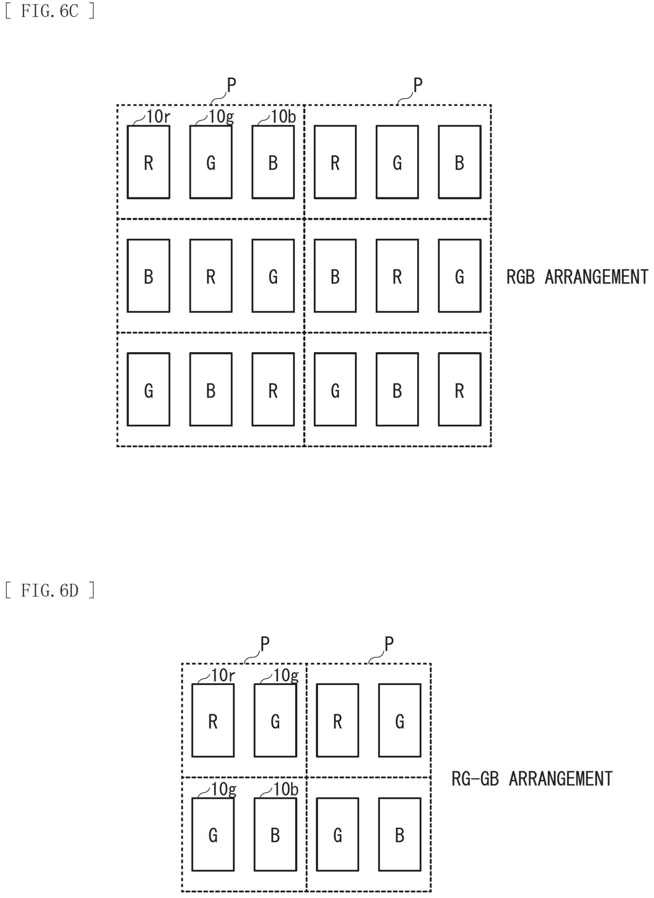

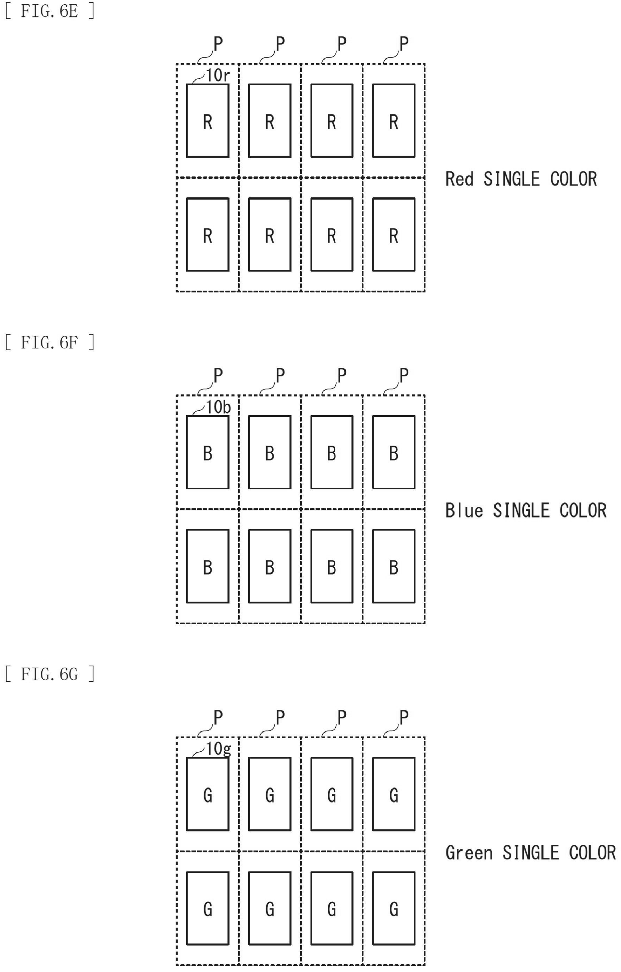

FIGs. 6A to 6G are each a diagram illustrating an arrangement example of the light-emitting elements of the display apparatus according to the embodiment. In the display apparatus 1, for example, the light-emitting element 10r, the light-emitting element 10g, and the light-emitting element 10b are arranged as in the example illustrated in FIG. 6A. The light-emitting element 10r, the light-emitting element 10g, and the light-emitting element 10b may be repeatedly arranged in the first substrate 101 to be in the RGB arrangement illustrated in FIG. 6B or 6C. In addition, for example, the light-emitting element 10r, the light-emitting element 10g, and the light-emitting element 10b may be arranged in RG/GB, as illustrated in FIG. 6D.

As illustrated in FIGs. 6E to 6G, only one type of the light-emitting element 10r, the light-emitting element 10g, and the light-emitting element 10b may be arranged. It is to be noted that the arrangement of the light-emitting elements is not limited to the illustrated example. For example, the display apparatus 1 may have a light-emitting element that is able to emit light of a color other than RGB.

The pixel P may include a plurality of light-emitting elements of different colors, or may include one/a plurality of light-emitting elements of the same color. The configuration of light-emitting elements of each of the pixels P may be determined by an image to be displayed in each display region of the display apparatus 1. In addition, in the display apparatus 1 and the display block 80, a pixel including a plurality of light-emitting elements of different colors and a pixel including only light-emitting elements of the same color (a pixel not including a plurality of light-emitting elements of different colors) as the light-emitting element, may be present in a mixed manner.

For example, in the display block 80 corresponding to a display region that displays any content such as a movie, the light-emitting elements in one pixel may be a plurality of light-emitting elements of different colors as in the RGB arrangement. In addition, in the display block 80 of a display region in which a specific mark is displayed in a specific location as in display of a warning mark, the light-emitting elements in one pixel may be only light-emitting elements of the same color.

An area of the region corresponding to pixels of an image and an occupied area of the light-emitting elements may be appropriately set depending on specifications of the display apparatus 1. In the display apparatus, a higher temperature of the light-emitting element (e.g., LED) tends to lead to lower conversion efficiency of the light-emitting element upon conversion of a current into light. For example, in a case where blue LEDs coated with a red phosphor and a green phosphor are used as the light-emitting elements 10r and 10g, an increase in a temperature of the blue LED may lead to a decrease in photoelectric conversion efficiency in accordance with a theory of phosphor. It is therefore important, for higher luminance, to supply a large current to the light-emitting element while suppressing an increase in a temperature around the light-emitting element.

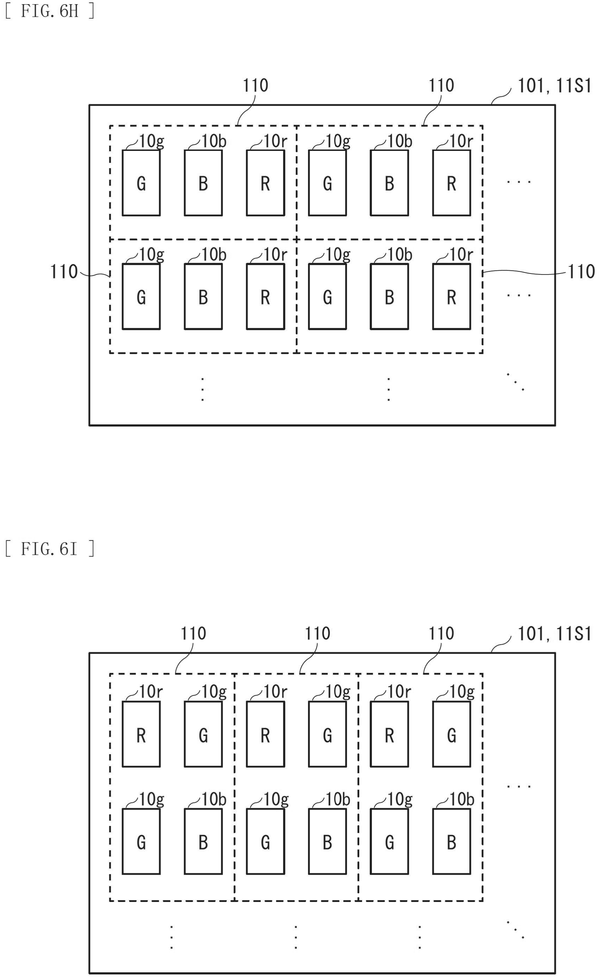

In the example illustrated in FIG. 6H, an area of the plurality of light-emitting elements 10 in a region 110 corresponding to one pixel of the image may be within a range of 30% or less with respect to an area of the region 110. For example, an area (percentage) occupied by the light-emitting elements 10 (light-emitting elements 10r, 10g, and 10b) of RGB in the region 110 may be within a range of 20% or more and 30% or less with respect to the area of the region 110. Configuring the display apparatus 1 in this manner allows a relatively large current to be supplied to the light-emitting element 10 while suppressing heat generation of the light-emitting element 10, thus making it possible to achieve higher luminance.

As an example, in a case of the display apparatus 1 having a resolution of 50 ppi to 80 ppi (pixels per inch), the occupied area of the plurality of light-emitting elements 10 in the region 110 may be set to be a value within a range of 20% or more and 30% or less with respect to the entire area of the region 110. It is possible to cause the plurality of light-emitting elements 10 in each region 110 to emit light efficiently, thus making it possible to achieve higher luminance.

In the example illustrated in FIG. 6I, the light-emitting element 10r, the light-emitting element 10g, and the light-emitting element 10b are arranged to be in RG/GB arrangement for each region 110 corresponding to one pixel of the image. An area of the total of four light-emitting elements 10 of one light-emitting element 10r, two light-emitting elements 10g, and one light-emitting element 10b may be within a range of 20% or more and 30% or less with respect to the area of the region 110.

The display apparatus 1 according to the present embodiment is configured using the plurality of display blocks 80, as described above with reference to FIG. 4 or other drawings. It is therefore possible to provide the display apparatus 1 along the curved surface of the reflective member 121 (e.g., windshield). The display blocks 80 may be arranged to allow an amount of deviation (shift amount) between the plurality of display blocks 80 adjacent to each other to be a value based on a shape of a portion of the reflective member 121 that reflects light from the light-emitting element 10 (e.g., a shape of a portion of the curved surface of the windshield).

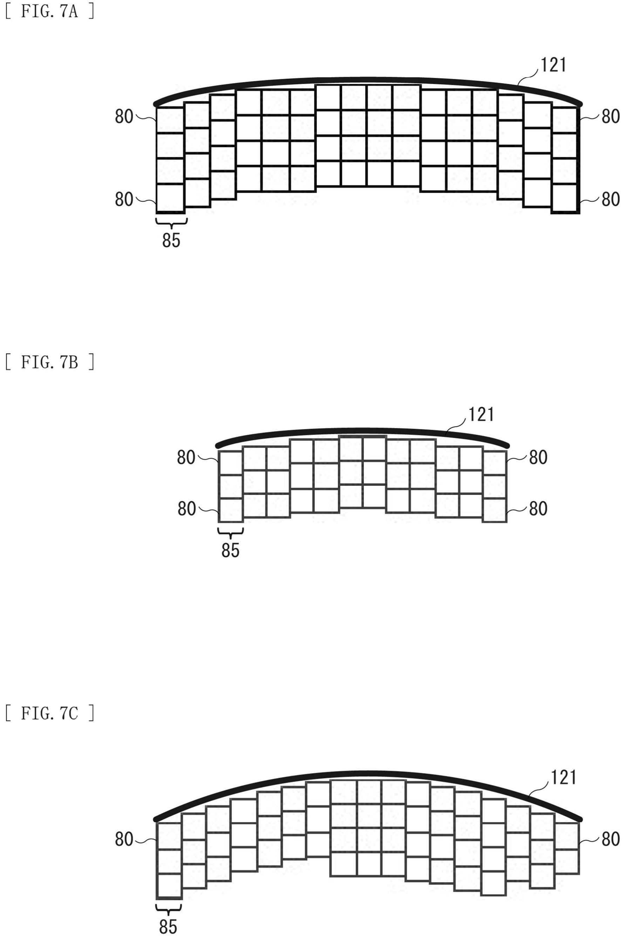

For example, in the examples as illustrated in FIGs. 7A and 7B, combinational arrangement of the support members 85 in which the display blocks 80 are arranged makes it possible to provide the display apparatus 1 having a shape corresponding to the windshield having a different curvature or shape.

In addition, as in the example illustrated in FIG. 7C, it may also be possible to arrange the display blocks 80 and the support members 85. As in FIG. 7C, a plurality of types of support members 85 (sub frames) of different numbers of mounted display blocks may be used. The support member 85 may be used that has a length adapted to the number of the display blocks 80 to be mounted. In addition, the support members 85 of the same length may be used. In the example illustrated in FIG. 7C, the support member 85 provided with two display blocks 80, the support member 85 provided with three display blocks 80, and the support member 85 provided with four display blocks 80 are used. That is, three sets of the display blocks 80 and the support member 85 are used. For example, also in a case of the dashboard 122 having different shapes between a side of the driver's seat and a side of the passenger's seat, it is possible to cause the display apparatus 1 to adapt to the shapes of the windshield and the dashboard 122.

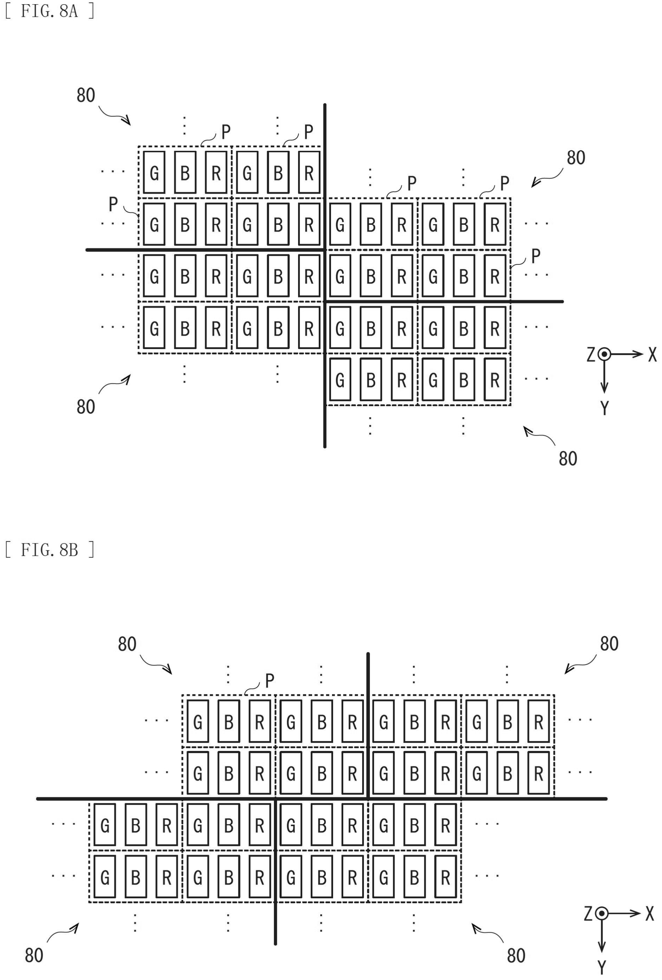

FIGs. 8A and 8B are each an explanatory diagram of an arrangement example of the display blocks of the display apparatus according to the embodiment. In the display apparatus 1, the plurality of display blocks 80 adjacent to each other in a horizontal direction (row direction) may be arranged to be shifted in the vertical direction (column direction) by a predetermined amount (e.g., at an interval (pitch) in units of one pixel or in units of a plurality of pixels). In the example illustrated in FIG. 8A, the plurality of display blocks 80 adjacent to each other in the X-axis direction is shifted from each other in the Y-axis direction in units of one pixel.

In addition, as in the example illustrated in FIG. 8B, the plurality of display blocks 80 adjacent to each other in the vertical direction may be arranged to be shifted in the horizontal direction by a predetermined amount. In the example illustrated in FIG. 8B, the plurality of display blocks 80 adjacent to each other in the Y-axis direction is shifted from each other in the X-axis direction in units of one pixel.

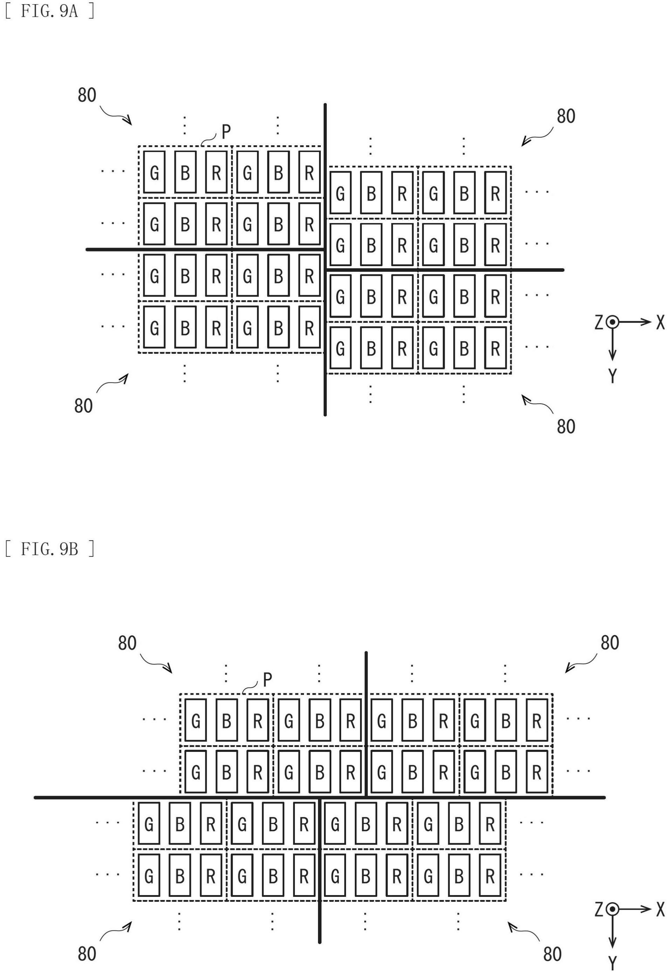

Arranging the display blocks 80 as in the example illustrated in FIG. 8A or 8B enables formation of the display apparatus 1 along the sides of the windshield having various curvatures. It is therefore possible, in the present embodiment, to prevent a decrease in the image quality of an image displayed by the display apparatus 1, as compared with a case where the display blocks 80 are not arranged to be shifted by units of one pixel or by units of a plurality of pixels as in the comparative example illustrated in FIG. 9B or 9B.

The display blocks 80 are arranged by adjusting positions to allow the arrays of adjacent display blocks and the pixels P to be continuous in the X direction and in the Y direction. In this position adjustment, the adjustment is performed, not on the basis of the position of the side of the display block 80, but on the basis of the position of the pixel P of each of the display blocks 80. Accordingly, the display blocks 80 may be arranged to allow the pixel position to be in a state of being continuous between the plurality of display blocks 80 and to allow the position of the sides of the display blocks 80 to be in a state of being discontinuous. The position adjustment of the display blocks 80 is performed when the plurality of display blocks 80 is arranged in the support member 85. In addition, the position adjustment of the display blocks 80 is also performed when arranging the support members 85 in which the display blocks 80 are arranged.

In addition, in the present embodiment, as in the examples illustrated in FIGs. 7A to 7C, the support member 85 in which the plurality of display blocks 80 is positioned and arranged may be prepared in advance, and the plurality of support members 85 may be arranged to be shifted along the reflective member 121. It is therefore possible to suppress generation of a gap between the plurality of display blocks 80 adjacent to each other. This makes it possible to prevent generation of a black line (or a white line) in an image and thus to improve the display quality of the image. It becomes possible to suppress occurrence of driver distraction.

In a case of using the support member 85 in which the display blocks 80 are arrayed and arranged longitudinally in a line, the positions of the display blocks 80 may be adjusted by shifting for each column to adapt to the curved surface of the windshield. It is therefore possible to obtain flexibility that is able to correspond to windshields having various shapes. In addition, assembly of the display apparatus 1 using the support member 85 provided with the display blocks 80 makes it possible to significantly reduce manufacturing costs (assembly costs), as compared with a case where the display apparatus 1 is individually manufactured for each vehicle 120 or each reflective member 121.

[Configuration of Pixel]

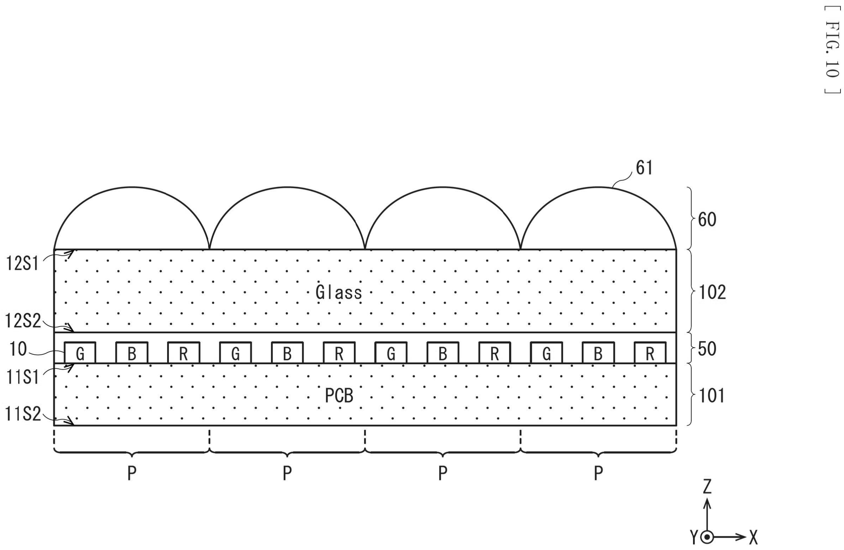

FIG. 10 is an explanatory diagram of an example of a cross-sectional configuration of pixels of the display apparatus according to the embodiment. The display apparatus 1 includes, for example, the first substrate 101, the light-emitting elements 10, a protective member 50, a second substrate 102, and a lens 61. The display apparatus 1 has a configuration in which the first substrate 101 and the second substrate 102 are stacked.

The first substrate 101 has the first surface 11S1 and the second surface 11S2 opposed to each other, as illustrated in FIG. 10. The second surface 11S2 is a surface on a side opposite to the first surface 11S1. The first substrate 101 is configured using a print circuit substrate (PCB), for example, as described above. The plurality of light-emitting elements 10 is provided on the side of the first surface 11S1 of the first substrate 101.

The drive section 40 described above may be provided on the side of the second surface 11S2 of the first substrate 101. It is to be noted that the signal processing section 30 may be provided in a member (e.g., the support member 85 or the support member 90) different from the first substrate 101, or may be provided on the side of the second surface 11S2 of the first substrate 101.

In the example illustrated in FIG. 10, the light-emitting element 10g, the light-emitting element 10b, and the light-emitting element 10r are provided for each of the pixels P. The protective member 50 (protective layer) is configured using a transparent resin, for example. The protective member 50 is provided to cover the light-emitting elements 10 (light-emitting elements 10g, 10b, and 10r in FIG. 10) of each of the pixels P.

The protective member 50 is formed between the first substrate 101 and the second substrate 102. The protective member 50 can also be referred to as a sealing member (sealing part) that covers the light-emitting element 10. The use of the transparent resin as the protective member 50 makes it possible to improve luminance of the light emitted by the light-emitting element 10.

The second substrate 102 has a first surface 12S1 and a second surface 12S2 opposed to each other. The second surface 12S2 is a surface on a side opposite to the first surface 12S1. The second substrate 102 is configured by, for example, a glass substrate. The lens 61 is provided on a side of the first surface 12S1 of the second substrate 102. The protective member 50 is provided on a side of the second surface 12S2 of the second substrate 102.

The lens 61 is an optical member that condenses light from the light-emitting element 10. The lens 61 guides the light from the light-emitting element 10 to the side of the above-described reflective member 121 (see FIG. 1 or other drawing). The lens 61 is provided above the light-emitting element 10, for example, for each of the pixels P or for every plurality of pixels P. For example, a sheet 60 (film) on which a plurality of lenses 61 is provided side by side is attached to the second substrate 102.

In the display apparatus 1 according to the present embodiment, providing the lens 61 makes it possible to efficiently guide the light from the light-emitting element 10 to the side of the user via the reflective member 121. This makes it possible to improve visibility of an image.

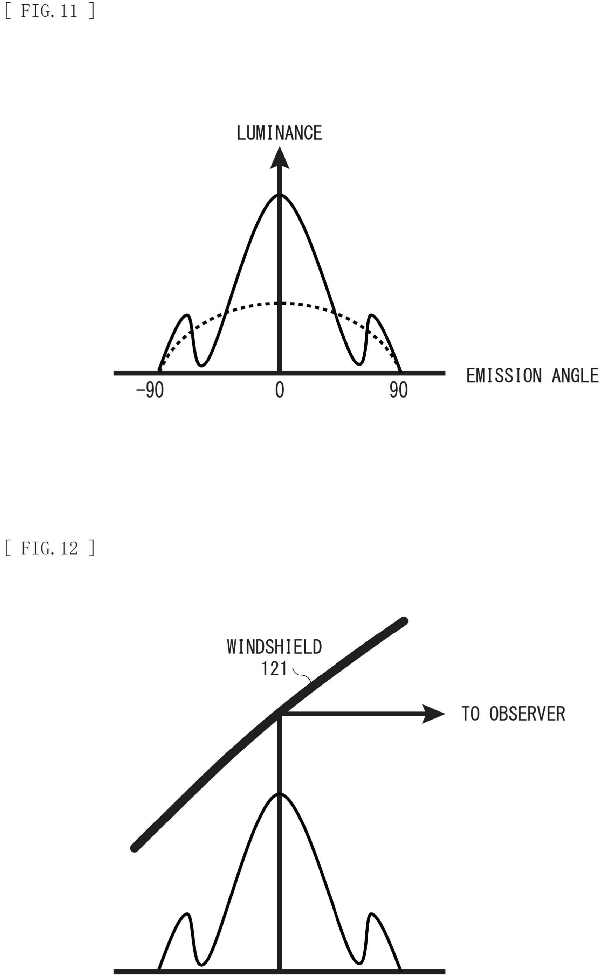

FIG. 11 is a diagram illustrating an example of light emission luminance of a pixel of the display apparatus according to the embodiment. The vertical axis indicates luminance of the light from the light-emitting element 10, and the horizontal axis indicates an emission angle. The solid line indicates a case where the lens 61 is provided (a case where the light from the light-emitting element 10 is emitted via the lens 61). The broken line indicates a case where the lens 61 is not provided (a case where the light from the light-emitting element 10 is emitted without passing through the lens 61).

Arranging the lens 61 for the light-emitting elements 10 of the pixel P enables an improvement in light emission intensity in a perpendicular direction (Z-axis direction). It is possible to appropriately guide the light toward the eyes of the user (observer), as schematically illustrated in FIG. 12. It becomes possible to improve the visibility of an image.

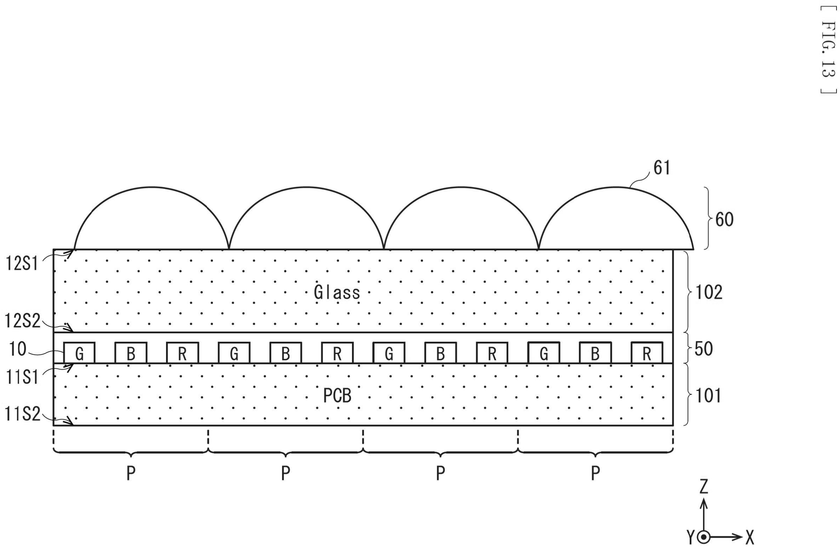

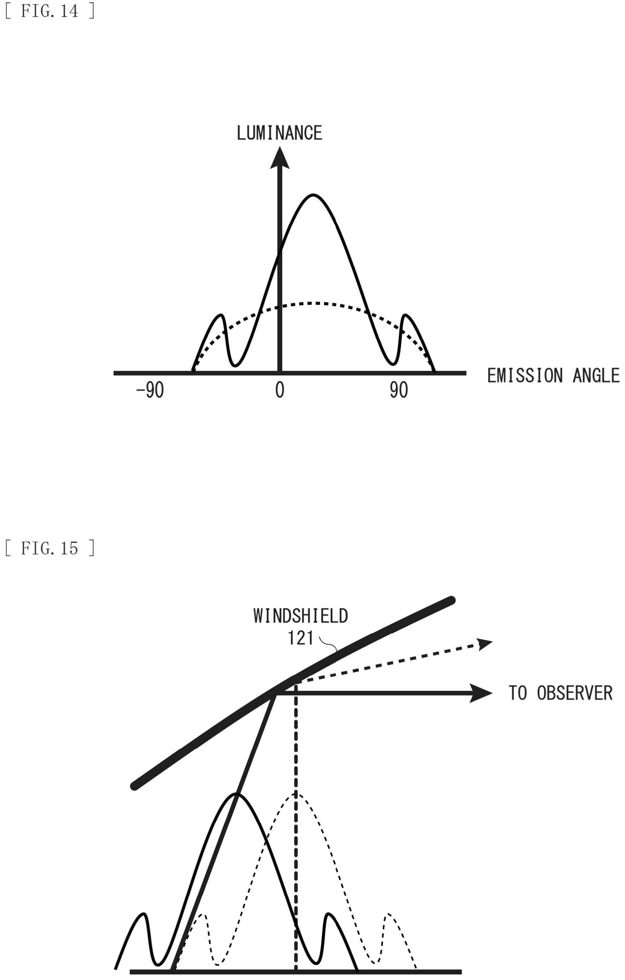

FIG. 13 is an explanatory diagram of another example of the cross-sectional configuration of the pixels of the display apparatus according to the embodiment. FIG. 14 is a diagram illustrating another example of the light emission luminance of the pixel. As in the example illustrated in FIG. 13, the center position of the lens 61 may differ from the center position of the light-emitting elements 10 in a plane orthogonal to a stacking direction of the light-emitting element 10 and the lens 61. For example, the position of the lens 61 of each of the pixels P may be appropriately changed depending on the shape of the reflective member 121 (windshield), the installation angle of the display apparatus 1, and the like.

Adjusting the relative position between the lens 61 and the light-emitting element 10 makes it possible to shift a position at which the light emission intensity reaches a peak (local maximum value), as in the example indicated by the solid line in FIG. 14. It is to be noted that, in FIG. 14, the solid line indicates a case where the lens 61 is provided and the broken line indicates a case where the lens 61 is not provided, in the same manner as the case of FIG. 11.

Arranging the lens 61 to be shifted with respect to the light-emitting element 10 makes it possible to appropriately guide the light to the eyes of the user in a manner corresponding to the shape of the windshield, for example, as indicated by the solid line in FIG. 15. It is therefore possible to improve the visibility of an image.

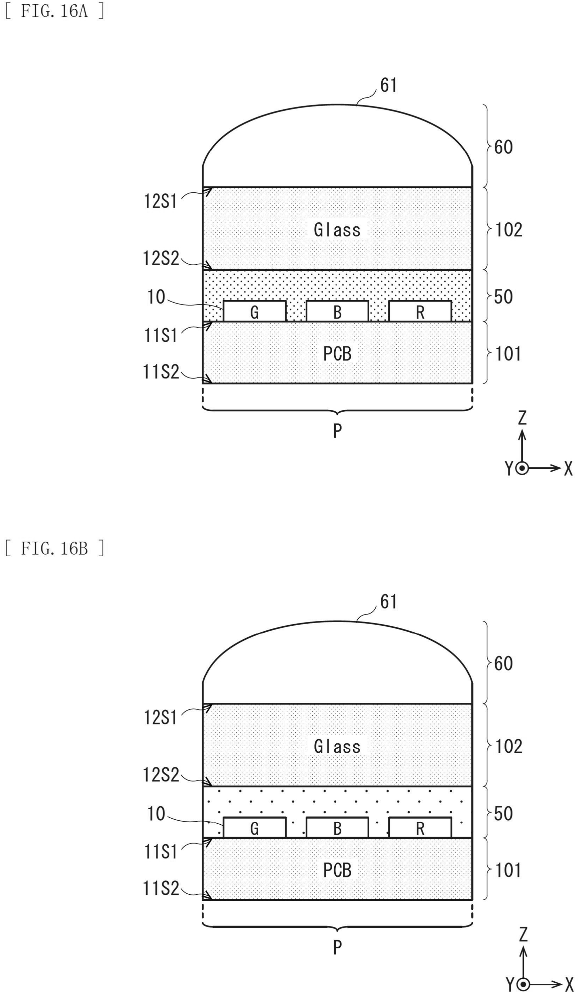

FIGs. 16A to 16D are each an explanatory diagram of another example of the cross-sectional configuration of the pixel of the display apparatus according to the embodiment. In the example illustrated in FIG. 16A, the display apparatus 1 includes the protective member 50 configured by a black resin. The black resin is configured using a silicone resin, for example, and has a low transmittance and a low reflectance.

The use of the black resin as the protective member 50 enables the pixel P in a non-light emitting state to appear more blackish while securing luminance of the light emitted by the light-emitting element 10. It is therefore possible to improve contrast of an image formed by the light from the display apparatus 1, thus making it possible to improve the image quality.

In the example illustrated in FIG. 16B, the display apparatus 1 includes the protective member 50 configured by a white resin. The white resin is configured using a silicone resin, for example, and has a high reflectance. The use of the white resin as the protective member 50 allows the white resin around the light-emitting element 10 to condense the light from the light-emitting element 10 to a side of the lens 61, thus making it possible to significantly improve luminance of the light emitted by the light-emitting element 10.

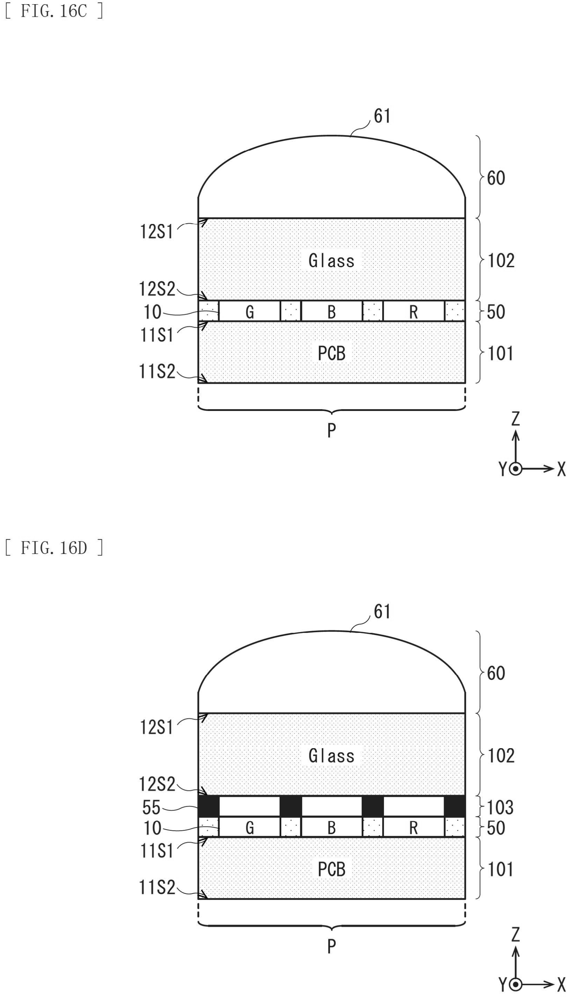

In the example illustrated in FIG. 16C, for example, lapping (lapping) processing allows the protective member 50, which is the white resin, to be thinned. This enables the pixel P of the non-light emitting state to appear blackish as compared with the case of FIG. 16B, thus making it possible to improve the image quality.

It is to be noted that, in a case where the protective member 50 is configured by the white resin, the display apparatus 1 may not be provided with the lens 61. For example, in a case where the light-condensing performance is sufficient, the lens 61 may not be disposed. In addition, as the protective member 50, a white resin, a black resin, or a transparent resin may be used. Alternatively, a mixed resin using two or more of a white resin, a black resin, or a transparent resin, i.e., a resin of a mixed color may be used.

The display apparatus 1 may include a light-blocking member 55, as in the example illustrated in FIG. 16D. The light-blocking member 55 is provided to cover a periphery of the light-emitting element 10. The light-blocking member 55 is configured by, for example, an absorbing member (absorber) such as a black pigment (e.g., carbon black), and has a characteristic of absorbing incident light. The light-blocking member 55 is referred to as a black matrix.

In the example illustrated in FIG. 16D, a third substrate 103 in which the light-blocking member 55 is formed is attached to the first substrate 101. In the display apparatus 1, providing the light-blocking member 55 enables the pixel P in the non-light emitting state to appear more blackish. It is possible to improve the display quality of an image.

[Configuration of Control Unit]

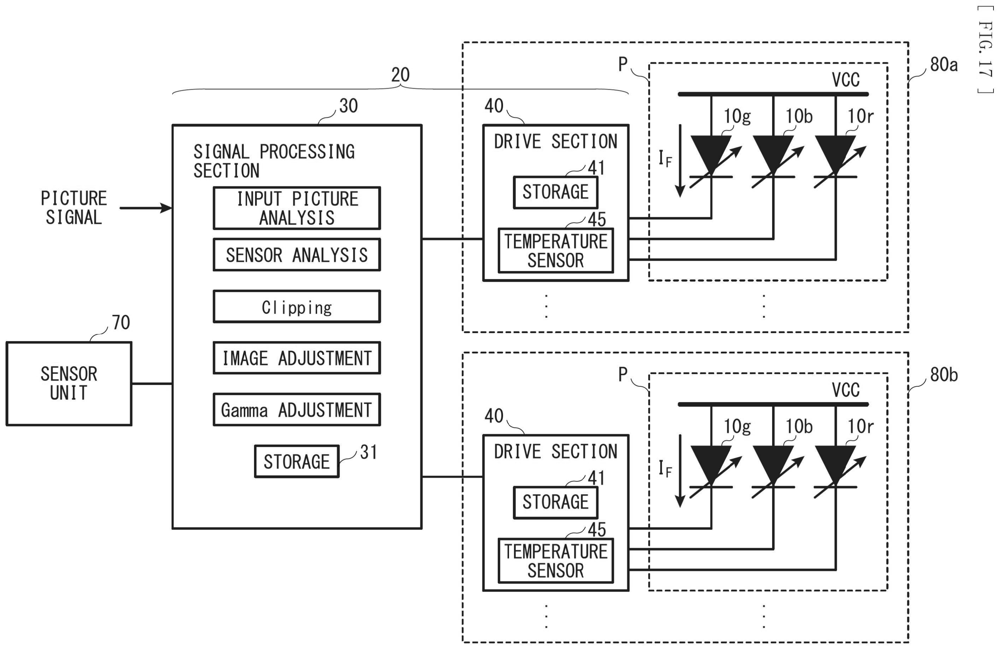

FIG. 17 is an explanatory diagram of a configuration example of the control unit of the display apparatus according to the embodiment. The display apparatus 1 includes a sensor unit 70, the above-described control unit 20, and the plurality of the pixels P. It is to be noted that FIG. 17 illustrates some of display blocks (a display block 80a and a display block 80b) of the display apparatus 1.

The sensor unit 70 is configured to be able to generate, as a sensor signal, for example, a signal related to a state or status of the vehicle 120 (see FIGs. 1 and 2), a signal related to a state of the display apparatus 1, or another signal. As an example, the sensor unit 70 may include various sensors such as a temperature sensor, an image sensor (camera), an illuminance sensor, a color sensor, a current sensor, a voltage sensor, and a power sensor.

As schematically illustrated in FIG. 17, the signal processing section 30 is configured to be able to execute various types of signal processing such as input picture analysis, sensor analysis, clipping processing, image adjustment, and gamma adjustment. The signal processing section 30 acquires a signal (picture signal) for each frame of an image (picture). The picture signal is image data (image signal), and is, for example, a signal indicating a signal value (pixel value) of each of the pixels in a frame period. The picture signal is a signal related to gradation, and can also be referred to as data indicating gradation for each of the pixels.

For example, picture signals of respective frames are sequentially inputted to the signal processing section 30. It is to be noted that the signal processing section 30 may acquire a picture signal generated by an external device, or a picture signal may be generated in the signal processing section 30. The signal processing section 30 is configured to perform processing to distribute a one-frame picture signal to the drive sections 40 of the respective display blocks 80, for example. The signal processing section 30 divides the one-frame picture signal into a plurality of picture signals, and outputs the divided picture signals to the drive sections 40.

The signal processing section 30 is configured to be able to perform input picture analysis processing to analyze a picture signal and control gamma adjustment and image adjustment on the basis of the analysis result. The signal processing section 30 may perform sensor analysis processing to analyze a sensor signal outputted from the sensor unit 70, and control the gamma adjustment and the image adjustment on the basis of the analysis processing. In addition, the signal processing section 30 may perform processing (function) to extract a signal portion, of the picture signal, to be used for displaying (reproducing) an image, i.e., clipping (Clipping).

The signal processing section 30 is configured to perform image adjustment processing (image quality adjustment processing) to change a signal format (data format) of a picture signal into a signal format suitable for displaying an image. In addition, the signal processing section 30 may execute gamma adjustment (gamma correction) processing on the picture signal. It is to be noted that the signal processing section 30 may perform, in the image quality adjustment processing or the gamma adjustment processing, processing to adjust maximum luminance, hue, gradation expression, and the like on data of the picture signal.

The drive section 40 includes a temperature sensor 45, as illustrated in FIG. 17. The temperature sensor 45 is a temperature detection circuit (temperature detection part), and is configured to be able to detect an ambient temperature. The temperature sensor 45 may generate a signal (temperature signal) related to a temperature of the drive section 40 (driver IC), and output the generated temperature signal (temperature information) to the signal processing section 30.

It is to be noted that the temperature sensor 45 may be provided outside the drive section 40. For example, the temperature sensor 45 may be disposed around the drive section 40 in the first substrate 101 in which the drive section 40 is implemented. In this case, the temperature sensor 45 may generate a temperature signal and output the generated temperature signal to the drive section 40 and the signal processing section 30.

The control unit 20 is configured to be able to control the light-emitting elements 10 of each of the pixels P on the basis of the temperature signal. For example, the control unit 20 controls a current to be supplied to the light-emitting element 10 on the basis of the temperature signal generated by each temperature sensor 45. The control unit 20 may adjust the current to be supplied to the light-emitting element 10 depending on a temperature indicated by the temperature signal. This enables the display apparatus 1 to reduce heat generation (heat loss) of the drive section 40.

It is possible to suppress heat generation in the display apparatus 1 without changing the number of the light-emitting elements to be driven by the drive section or increasing IC size or in order to improve heat dissipation characteristics. Reducing the heat generation of the drive section 40 makes it possible to increase a drive current suppliable to the light-emitting element 10 from the drive section 40. This makes it possible, for example, to achieve higher luminance by means of an increased amount of current in a case where the ambient temperature is low, and to prevent occurrence of a break of a circuit of the drive section 40 in a case where the ambient temperature is high.

As an example, the drive section 40 is configured to control a voltage and a current to be supplied to the light-emitting element 10 on the basis of the temperature signal generated by the temperature sensor 45. The drive section 40 executes a control to decrease a current to be supplied to the light-emitting element 10 depending on a temperature indicated by the temperature signal. For example, the drive section 40 may switch setting tables (look-up tables) depending on the ambient temperature of the drive section 40 to thereby change a drive current of the light-emitting element 10 corresponding to a signal value of the pixel (pixel value).

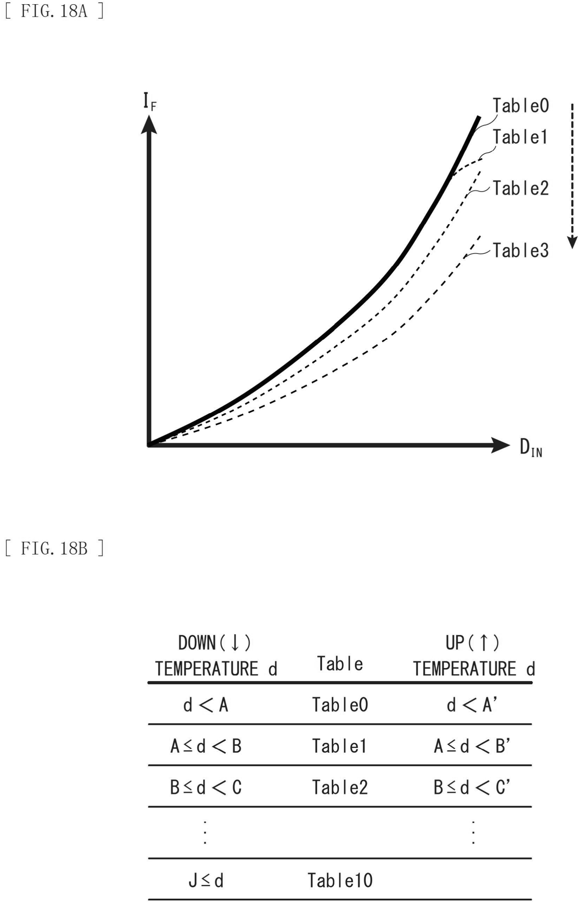

FIG. 18A is an explanatory diagram of a relationship between input data and a current supplied to the light-emitting element of the display apparatus according to the embodiment. In FIG. 18A, the horizontal axis indicates input data Din which is a signal value of the pixel P (pixel value), and the vertical axis indicates a current $I_F$ to be supplied to the light-emitting element 10 by the drive section 40. The current $I_F$ is a drive current flowing through the light-emitting element 10, as in the example illustrated in FIG. 17.

A storage 41 of the drive section 40 is configured to store data (setting table) on a correspondence relationship between a signal value of the pixel (pixel value) and the current $I_F$ of the light-emitting element 10. The storage 41 includes, for example, a non-volatile memory, and stores (records) a program and data. The storage 41 may store various types of information such as a program and data to be used for controlling the light-emitting element 10. The storage 41 is a recording medium such as a semiconductor memory.

The storage 41 holds, for example, a plurality of setting tables (Table 0, Table 1, Table 2, Table 3, ...) for each temperature range. The drive section 40 reads and refers to the setting table stored in the storage 41, and performs processing to adjust (correct) a current to be supplied to the light-emitting element 10. In a case where the ambient temperature is increased, the drive section 40 may switch the setting tables to perform a control to decrease the current to be supplied to the light-emitting element 10, as schematically indicated by broken line arrows in FIG. 18A.

The drive section 40 is configured, for example, to compare a threshold and a temperature indicated by the temperature signal with each other and change the setting tables on the basis of the comparison result. The drive section 40 may use a setting table selected depending on the ambient temperature to control the current to the light-emitting element 10. It is to be noted that, as illustrated in FIG. 18B, hysteresis of the threshold may be set by determining thresholds that differ for respective setting tables in a case where the temperature is increased (UP ($\uparrow$)) and in a case where the temperature is decreased (DOWN ($\downarrow$)). In the example illustrated in FIG. 18B, thresholds A to J and thresholds A' to J' are set.

In the example illustrated in FIG. 17, the drive section 40 of the display block 80a may control supply of a current to the light-emitting elements 10 of each of the pixels P of the display block 80a on the basis of the temperature signal generated by the temperature sensor 45. In addition, the drive section 40 of the display block 80b may control supply of a current to the light-emitting elements 10 of each of the pixels P of the display block 80b on the basis of the temperature signal generated by the temperature sensor 45. Depending on the temperature detected by the temperature sensor 45 for each of the drive sections 40, each of the drive sections 40 is able to adjust the drive the current $I_F$ and effectively suppress the heat generation of the drive section 40. The drive section 40 is able to suppress the heat generation by decreasing the drive current $I_F$ in a case where the temperature is high.

In addition, the control of the drive current $I_F$ may be performed in the drive section 40 having a higher temperature due to an increased temperature. In addition, the control of the drive current $I_F$ may be performed not only in the drive section 40 having the increased temperature, but also in another drive section 40 in the display block 80 where the drive section 40 having the increased temperature is disposed.

For example, in all the drive sections 40 in the display block 80 where the drive section 40 having the increased temperature is disposed, the setting table is changed to allow the drive current $I_F$ to be decreased. In this case, the same setting table may be used for all the drive sections 40 where the drive current $I_F$ is decreased.

It is to be noted that the control of the drive current $I_F$ may be performed not only in the drive section 40 having the increased temperature, but also in another drive section 40 of the display block 80 other than the display block 80 where the drive section 40 having the increased temperature is disposed. For example, not only in the display block 80 where the drive section 40 having the increased temperature is disposed, but also in all the drive sections 40 in the display apparatus 1, the setting table is changed to allow the drive current $I_F$ to be decreased. In this case, the same setting table may be used for all the drive sections 40 where the drive current $I_F$ is decreased (drive section 40 in the plurality of display blocks 80).

The signal processing section 30 of the control unit 20 may cause the drive section 40 to control the current to be supplied to the light-emitting element 10 on the basis of the temperature signal generated by each temperature sensor 45. The above-described setting tables may be stored in a memory inside the signal processing section 30, e.g., in a storage 31 (see FIG. 17).

The storage 31 of the control unit 20 is configured to be able to store data (setting table) related to a correspondence relationship between a signal value of the pixel and the current $I_F$ to be supplied to the light-emitting element 10. The storage 31 includes, for example, a non-volatile memory, and stores a program and data. The storage 31 may store various types of information such as a program and data to be used for controlling the drive section 40. The storage 31 is a recording medium such as a semiconductor memory.

The control unit 20 controls a current to be supplied by each of the drive sections 40 to the light-emitting element 10 on the basis of the temperature signal generated by each temperature sensor 45. The control unit 20 may control each of the drive sections 40 of the display block 80a on the basis of the temperature signal generated by the temperature sensor 45 of the display block 80a, and may adjust a current to each of the light-emitting elements 10 of the display block 80a. In addition, the control unit 20 may control each of the drive sections 40 of the display block 80b on the basis of the temperature signal generated by the temperature sensor 45 of the display block 80b, and may adjust a current to each of the light-emitting elements 10 of the display block 80b.

It is to be noted that the control unit 20 may compare a threshold and one or a plurality of temperatures, among temperatures for the respective drive sections 40 detected by the respective temperature sensors 45 with each other, and may change the setting tables set in the respective drive sections 40 simultaneously (in parallel) depending on the comparison result. The control unit 20 may be configured to be able to set individual setting tables for the respective light-emitting elements 10 of the respective colors to adapt to characteristics of the light-emitting elements 10r, 10g, and 10b of the respective colors (R/G/B).

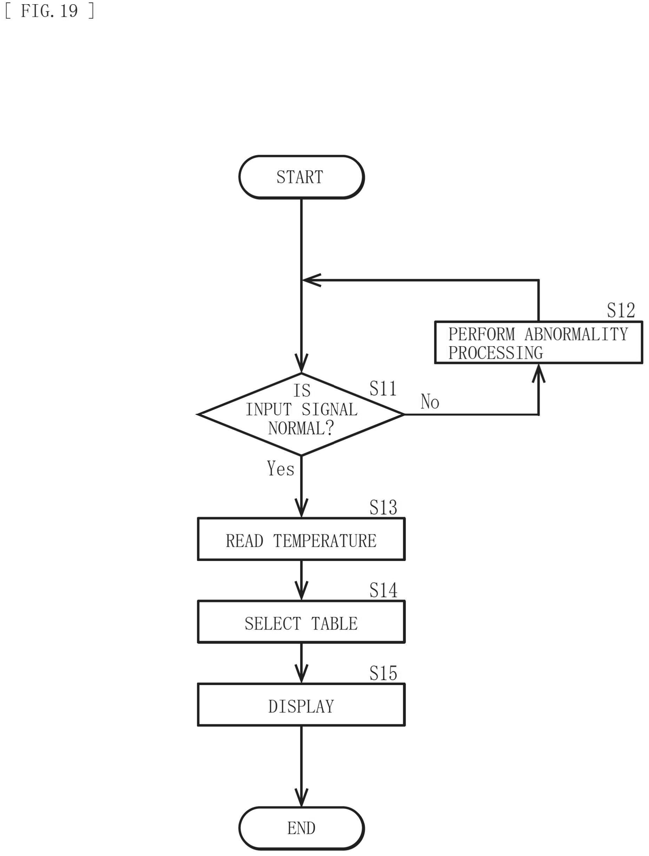

FIG. 19 is a flowchart illustrating an operation example of the display system according to the embodiment. Description is given of an operation example of the display system 200 with reference to the flowchart of FIG. 19. For example, in a case where a picture signal is inputted to the display apparatus 1 after activation of an application (system) of the display apparatus 1, the flowchart of FIG. 19 is started.

The control unit 20 of the display apparatus 1 (the signal processing section 30 and the drive section 40) refers to the setting tables stored in the storage 31 (or the storage 41), for example, and selects and sets a threshold and the setting table to serve as an initial setting.

In step S11, the control unit 20 determines whether or not an inputted picture signal is normal. In a case where a determination result in step S11 is negative ("No" in step S11), the processing proceeds to step S12. For example, in a case where the picture signal is a signal indicating an all white screen for a certain period of time, i.e., a signal indicating that all the light-emitting elements 10 are driven at 100% current $I_F$ that is a maximum current, the control unit 20 makes a negative determination in step S11.

In step S12, the control unit 20 performs abnormality processing. The control unit 20 notifies the user that abnormality has been detected, for example, by an indicator, sound, an image, or the like. After step S12, the processing returns to step S11.

In a case where the determination result in step S11 is affirmative ("Yes" in step S11), the processing proceeds to step S13. In step S13, the control unit 20 acquires a temperature signal generated by the temperature sensor 45, and reads an ambient temperature. After step S13, the processing proceeds to step S14.

In step S14, the control unit 20 selects a setting table depending on a temperature indicated by the temperature signal, and sets and updates the setting table. In step S15, the control unit 20 supplies the current $I_F$ to each of the light-emitting elements 10 on the basis of the setting table set in step S14 to thereby control light emission of each of the light-emitting elements 10 and display the image.

After step S15, the display system 200 finishes the processing illustrated in the flowchart of FIG. 19. It is to be noted that, in a case where a picture signal is inputted to the signal processing section 30, the control unit 20 of the display apparatus 1 may re-execute the processing illustrated in the flowchart of FIG. 19.

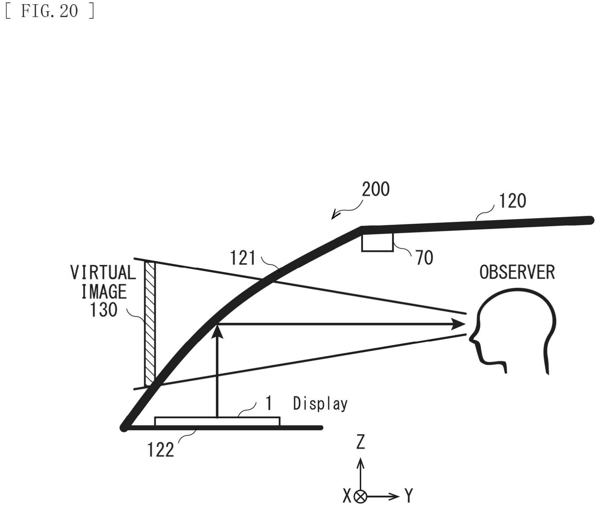

FIG. 20 is a diagram illustrating an arrangement example of sensors of the display apparatus according to the embodiment. Various sensors of the sensor unit 70 described above, e.g., an illuminance sensor, a color sensor, a camera, or the like may be arranged, as illustrated in FIG. 20. For example, an illuminance sensor, a camera, or the like may be arranged on a back side of a rearview mirror of the vehicle 120 to measure an area ahead of the vehicle 120.

The control unit 20 of the display apparatus 1 may control an image on the basis of a result of the measurement performed by the sensor unit 70. For example, the signal processing section 30 (or the drive section 40) may acquire information on brightness for each of display areas, a background color, a shape and a position of an object, or the like using an illuminance sensor, a color sensor, a camera (image sensor), or the like to perform image control.

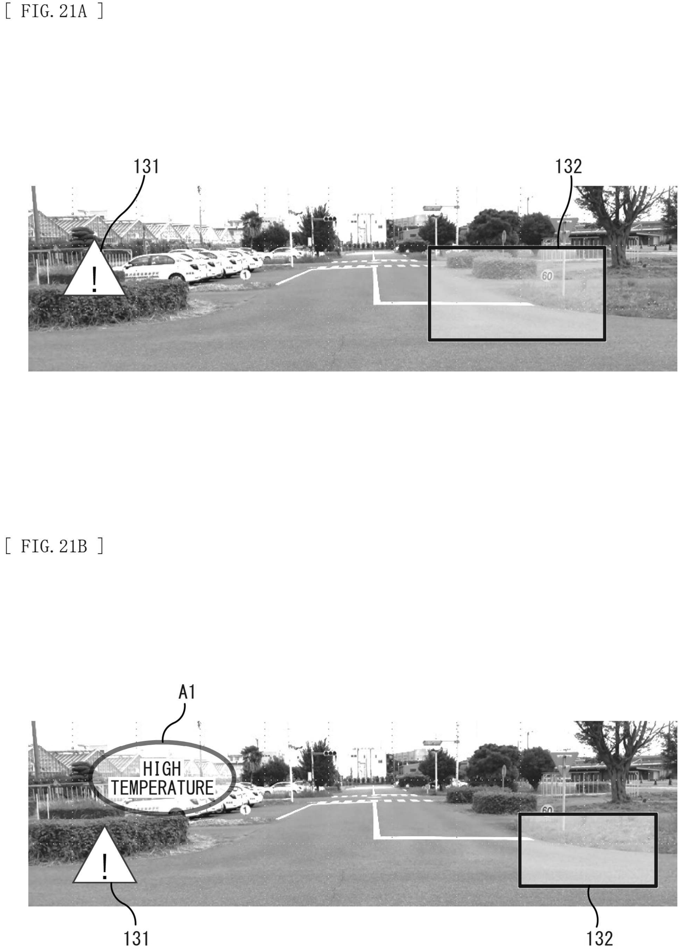

FIGs. 21A and 21B are each an explanatory diagram of an example of image control performed by the display apparatus according to the embodiment. The control unit 20 may control luminance (brightness) of an image, size of the image, a display position of the image, or the like on the basis of the temperature signal detected by the temperature sensor 45. For example, the signal processing section 30 of the control unit 20 may determine a control content of the image depending on priority of the image. The signal processing section 30 may perform different image control depending on the types of contents to be displayed.

In the example illustrated in FIG. 21A, the display apparatus 1 displays a warning mark 131 (Caution) and another image 132 (e.g., contents of moving images) in a manner superposing them on a real image ahead of the vehicle 120 observed through the windshield that is the reflective member 121. In a case where the temperature of the display apparatus 1 is increased due to an influence of direct sunlight or the like, the signal processing section 30 (or the drive section 40) may perform processing to decrease luminance of the image 132 with lower priority, among the warning mark 131 and the image 132. It is possible to suppress an increase in the temperature while maintaining luminance of the warning mark 131 with higher priority.

The signal processing section 30 may not impose luminance limitation on image information such as a warning image (e.g., an oncoming vehicle stopped for right turn, or a displayed objects such as a bicycle to overtake) and information on route guidance (e.g., direction indication for left turn, right turn, etc.). In a case where the temperature of the display apparatus 1 is increased, the signal processing section 30 may impose luminance limitation on a content with less influence on safety.

As an example, as illustrated in FIG. 21B, in a case where a temperature is increased in an upper left region A1, the signal processing section 30 may change a display position of the warning mark 131 to a lower left region. In addition, the signal processing section 30 may decrease size of the image 132 with relatively lower priority and change a display position of the image 132 to a lower right region.

FIGs. 22A to 22C are each an explanatory diagram of another example of the image control performed by the display apparatus according to the embodiment. The signal processing section 30 may adjust luminance or the like of an image depending on the ambient temperature for each of the display areas (e.g., for each of the display blocks 80 or for every plurality of display blocks 80) in a screen. The signal processing section 30 may adjust luminance or colors in each of the display areas depending on the brightness of each of the display areas of the image.

As in the example illustrated in FIG. 22A, the signal processing section 30 may adjust luminance or the like of the image on the basis of the brightness of each of the display areas from one side to the other side of the windshield. This makes it possible to effectively improve the image quality of the image. In the example illustrated in FIG. 22A, the signal processing section 30 may determine, using a sensor signal or the like, a brightness distribution of each of the display areas from the air region to the road region, and may set luminance, colors, or the like of the image for each of the display areas. The signal processing section 30 may change the brightness or the like of each of the display areas depending on an illumination distribution of the background.

As illustrated in FIG. 22B, in a case where a portion of a vehicle body (e.g., a hood, a dashboard, etc.) reflects in a portion of the display region (e.g., a region A2 illustrated in FIG. 22B), the display apparatus 1 may adjust an image (e.g., change display colors) in the region A2, in consideration of a color of the portion of the vehicle body.

In addition, as in the example illustrated in FIG. 22C, a print member (a black print 140) for a screen may be disposed in a region on the lower side of the windshield. In this case, the display apparatus 1 is able to project an image on the windshield and the black print 140.

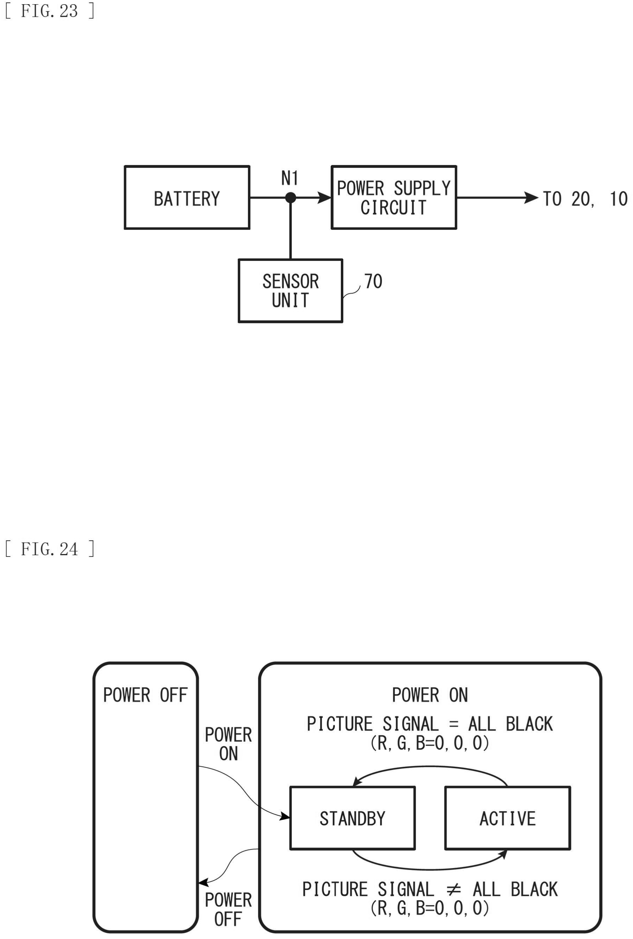

FIG. 23 is an explanatory diagram of an arrangement example of sensors of the display apparatus according to the embodiment. As in the example illustrated in FIG. 23, for example, a voltage sensor, among the various sensors of the sensor unit 70 described above, may be coupled between a battery of the vehicle 120 and a power supply circuit for the display apparatus 1. In addition, a current sensor may be provided for a node N1 illustrated in FIG. 23. The signal processing section 30 may adjust luminance or the like of an image depending on a voltage of the battery of the vehicle 120 detected by the voltage sensor, for example.

The signal processing section 30 may decrease luminance of an image with lower priority in a case where the battery of the vehicle 120 is decreased. Adjusting the drive current of the light-emitting element 10 in consideration of the voltage of the battery makes it possible to suppress a decrease in luminance of an image with higher priority. It is to be noted that the signal processing section 30 may adjust the luminance or the like of the image depending on a consumption current detected by the current sensor.

In addition, for example, the signal processing section 30 may estimate a remaining battery amount using a current flowing through the node N1 illustrated in FIG. 23, i.e., a current to be supplied to the display apparatus 1 and a voltage of the node N1. When using the current (IA) flowing through the node N1, a voltage VA of the node N1, and efficiency η, power (Display power) consumed by a side of the display apparatus 1 may be represented by the following expression.

$$\text{Display power} = (VA \times IA / \eta)$$

The signal processing section 30 may adjust luminance of an image depending on the estimated remaining battery amount. Adjusting the drive current of the light-emitting element 10 depending on the remaining battery amount makes it possible to suppress deterioration of the image quality of an image with higher priority. Additionally, a region to be displayed may be adjusted. Adjusting both the luminance and the display region makes it possible to prevent necessary information from being unseen in a case where the luminance is decreased.

FIG. 24 is a diagram illustrating an example of a state transition of the drive section of the display apparatus according to the embodiment. The drive section 40 may have a standby function. In a standby state (standby mode), for example, the DAC, the amplifier circuit, and the like inside the drive section 40 are brought into a stopped state. In the standby state, the drive section 40 has smaller (lower) power consumption as compared with a case of an active state (active mode), and is brought into a power saving state.

For example, in a case where a picture signal assigned to the drive section 40 is a signal indicating all black as illustrated in FIG. 24, the signal processing section 30 may set the drive section 40 in the standby state from the active state. In addition, in a case where a picture signal assigned to the drive section 40 is a signal indicating all white as illustrated in FIG. 24, the signal processing section 30 may set the drive section 40 in the active state from the standby state. Controlling the state of the drive section 40 makes it possible to reduce power consumption of the display apparatus 1.

It is to be noted that the signal processing section 30 may control the state of the drive section 40 for each of the display blocks 80. For example, the signal processing section 30 brings each of the plurality of drive sections 40 in the display blocks 80 into the standby state depending on an inputted picture signal, thereby making it possible to effectively reduce the power consumption. In addition, the standby control may be performed for each of the drive sections 40, but the standby control may also be performed for each of the display blocks 80.

[Workings and Effects]

The display apparatus (display apparatus 1) according to the present embodiment includes a first display block (display block 80) and a second display block. The first display block (display block 80) includes a plurality of light-emitting elements (light-emitting elements 10) provided to be arrayed in a first direction (e.g., X-axis direction) and a second direction (e.g., Y-axis direction) intersecting the first direction. The second display block includes a plurality of light-emitting elements provided to be arrayed in the first direction and the second direction. The first display block and the second display block are disposed adjacent to each other in the first direction, and are shifted from each other by a predetermined amount in the second direction.

The display apparatus 1 according to the present embodiment is provided with the plurality of display blocks 80 each including the plurality of light-emitting elements 10. The plurality of display blocks 80 adjacent to each other in the first direction (e.g., X-axis direction) are arranged to be shifted from each other by a predetermined amount in the second direction (e.g., Y-axis direction). This enables the display apparatus 1 to be provided along the curved surface of the reflective member 121 (e.g., windshield), thus making it possible to achieve a larger screen and higher luminance. It becomes possible to achieve the display apparatus 1 having high display performance.

The display apparatus (display apparatus 1) according to the present embodiment includes a plurality of display blocks (display blocks 80), a temperature sensor (temperature sensor 45), and a control unit (control unit 20). The plurality of display blocks (display blocks 80) each has a plurality of light-emitting elements (light-emitting elements 10). The temperature sensor (temperature sensor 45) is provided for each of the display blocks, and is able to generate a first signal (temperature signal) related to an ambient temperature. The control unit (control unit 20) is able to control the light-emitting elements on the basis of the first signal.

In the display apparatus 1 according to the present embodiment, the control unit 20 (the signal processing section 30, the drive section 40, etc.) controls the light-emitting elements 10 on the basis of the temperature signal generated by the temperature sensor 45. It is therefore possible to suppress heat generation in the display apparatus 1. It becomes possible to improve the display performance of the display apparatus 1.

Next, description is given of modification examples of the present disclosure. Hereinafter, components similar to those of the foregoing embodiment are denoted by the same reference numerals, and the descriptions thereof are omitted as appropriate.

<2. Modification Examples>

(2-1. Modification Example 1)

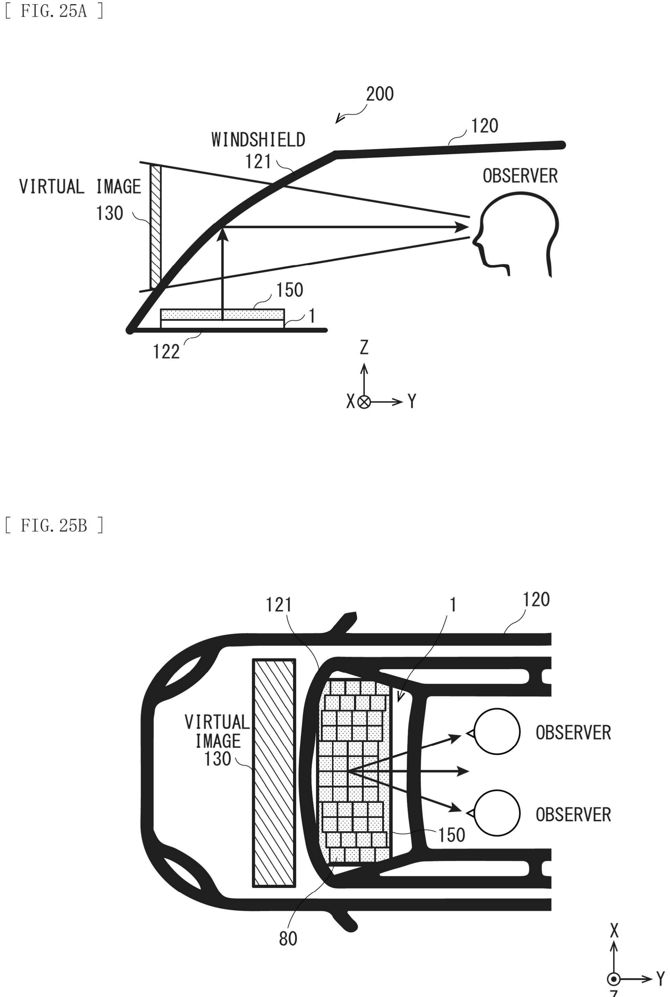

FIGs. 25A and 25B are each an explanatory diagram of a configuration example of a display system according to Modification Example 1 of the present disclosure. The display system 200 may include a louver 150, as in the example illustrated in FIGs. 25A and 25B. The louver 150 is provided on the display apparatus 1, for example. The louver 150 may be disposed to cover the entire top surface of the display apparatus 1.

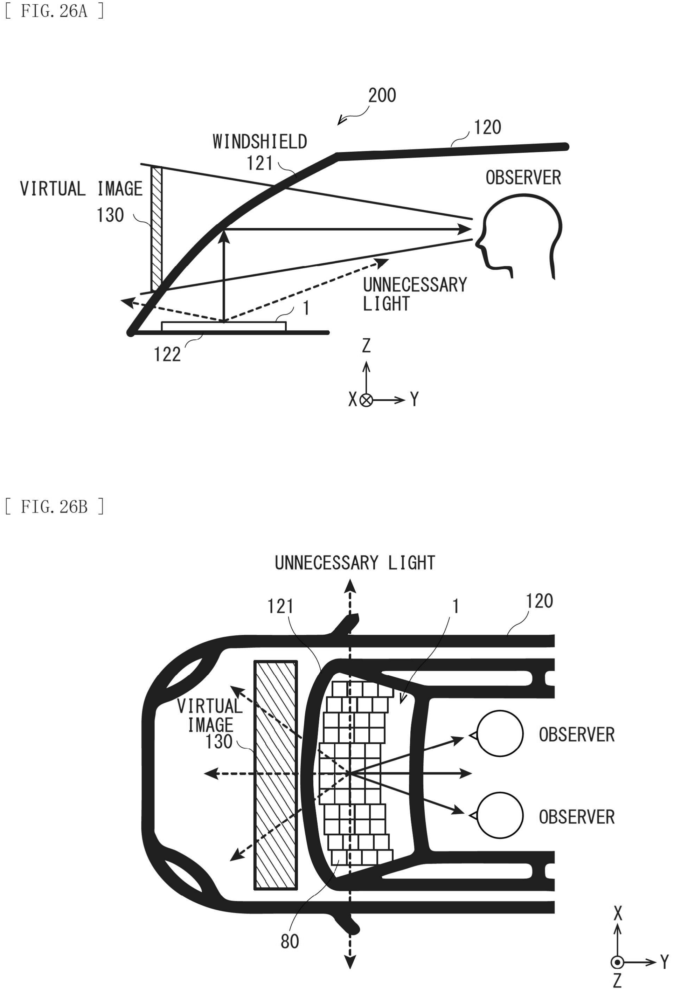

FIGs. 26A and 26B are each an explanatory diagram of behavior of the display system 200 according to the embodiment illustrated in FIG. 1 or other drawings. The display system 200 illustrated in FIGs. 26A and 26B does not include the louver 150 on the display apparatus 1. In this case, as illustrated in FIGs. 26A and 26B, unnecessary light from the display apparatus 1 may leak to the surroundings, which may possibly cause occurrence of driver distraction. In contrast, in the display system 200 of Modification Example 1 illustrated in FIGs. 25A and 25B, the louver 150 is provided, which suppresses leakage of unnecessary light to the surroundings, thus making it possible to suppress the occurrence of driver distraction.

(2-2. Modification Example 2)

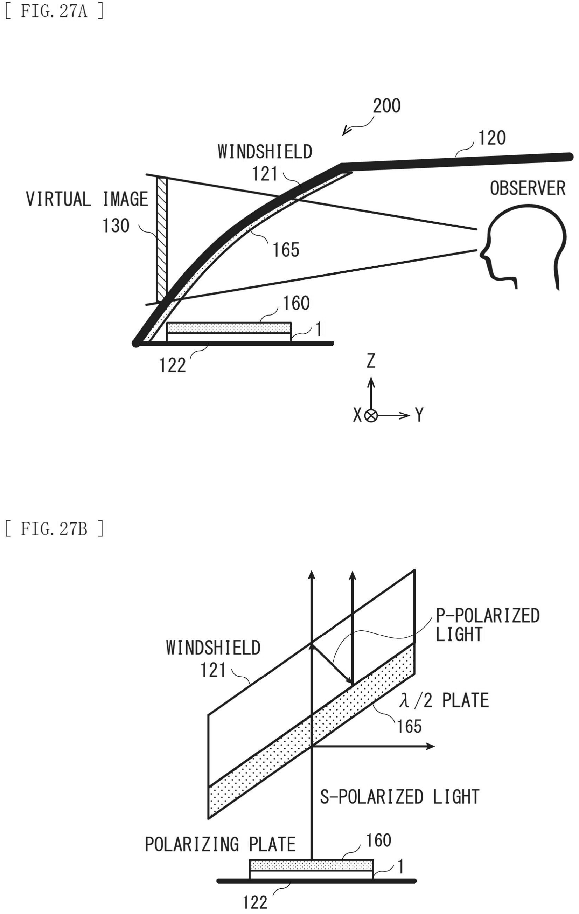

FIGs. 27A and 27B are each an explanatory diagram of a configuration example of a display system according to Modification Example 2. The display system 200 may include a polarizing plate 160 and a $\lambda/2$ plate 165. The polarizing plate 160 is provided on the display apparatus 1. The polarizing plate 160 is disposed to cover the entire top surface of the display apparatus 1, for example. The $\lambda/2$ plate 165 is disposed on the windshield, which is the reflective member 121, on the side of the display apparatus 1.

In the case of the example illustrated in FIGs. 27A and 27B, for example, a portion of S-polarized light outputted from the display apparatus 1 via the polarizing plate 160 is reflected by a surface of the windshield on the outside to be turned into P-polarized light. This P-polarized light is reflected by the $\lambda/2$ plate 165 toward the outside of the windshield. It is therefore possible to suppress occurrence of a double image and thus to improve the image quality.

(2-3. Modification Example 3)

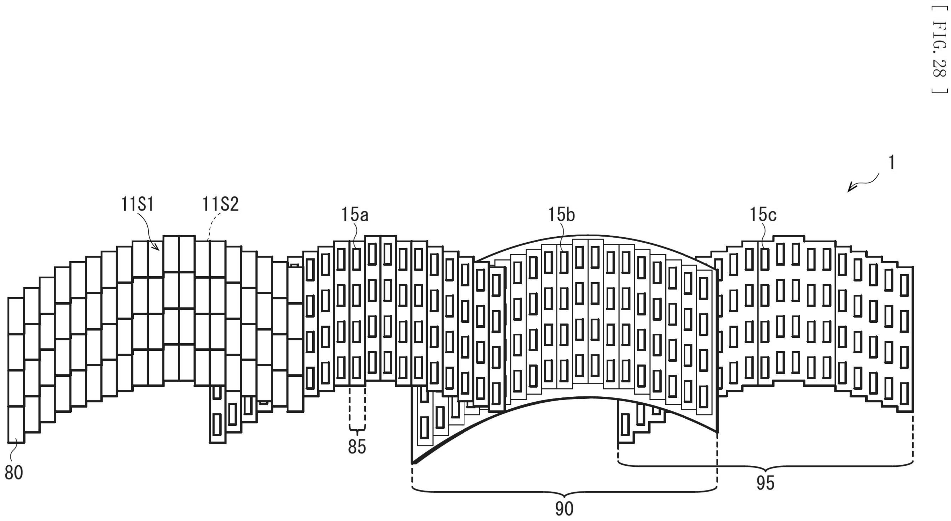

FIGs. 28 to 30 are each an explanatory diagram of a configuration example of a display apparatus according to Modification Example 3. The display apparatus 1 may include, in addition to the support member 85 that is a sub frame to which the display blocks 80 (panels) are attached and the support member 90 that is a main frame to which the support members 85 are attached, a member (referred to as a connector substrate 95) attached to the support member 90. The connector substrate 95 is configured using a plurality of print circuit substrates, for example, and can also be referred to as a connector frame. It is to be noted that, in addition to this structure of Modification Example 3, a louver may be used as in Modification Example 1, or a polarizing plate may be used as in Modification Example 2. For example, the display apparatus 1 and the display system 200 may include the louver 150 described above, and may include the polarizing plate 160 and the λ/2 plate 165.

As in the example illustrated in FIG. 28, for example, the connector substrate 95 is attached to a side opposite to a side of a front surface of the support member 90, to which the plurality of support members 85 is attached, i.e., a side of a back surface of the support member 90. The above-described signal processing section 30 is provided on a side of a back surface of the connector substrate 95. The signal processing section 30 may be disposed on the back surface of the connector substrate 95 for every plurality of drive sections 40, i.e., for every predetermined number of the drive sections 40.

The display apparatus 1 may include a shield cover on the side of the back surface of the connector substrate 95. The shield cover is, for example, a shielding member configured using a metal material, and is attached to the back surface of the connector substrate 95. Providing the shield cover makes it possible to take a countermeasure against EMC (electromagnetic compatibility).

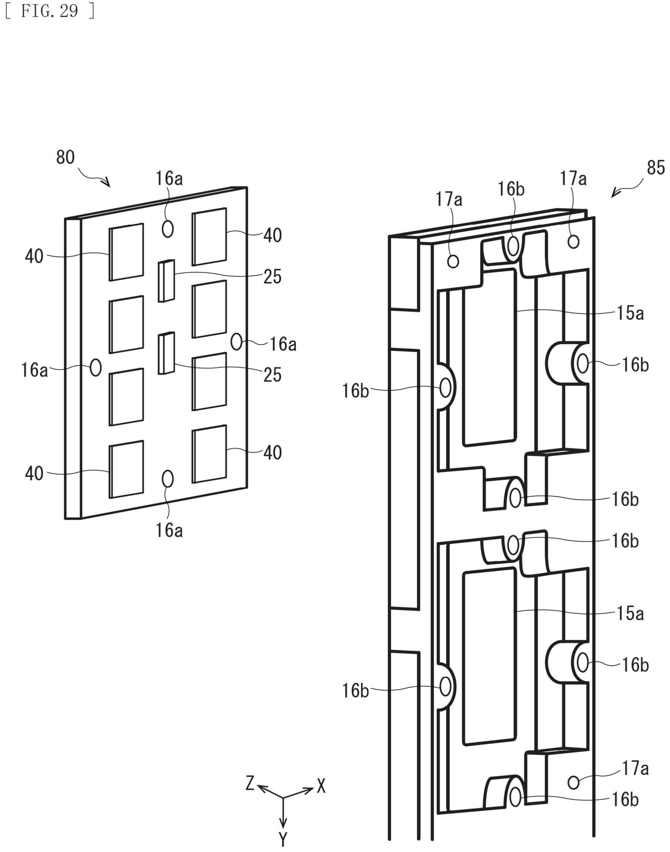

A connector 25 is provided on a side of a back surface of the display block 80 (i.e., on a side of a surface, of the display block 80, opposed to the support member 85), as in the example illustrated in FIG. 29. The connector 25 is disposed on the back surface (rear surface) of the display block 80, and is coupled to the drive section 40. The connector 25 is provided around the drive section 40, for example, and is electrically coupled to a terminal of the drive section 40 (driver IC).

The display block 80, the support member 85, and the support member 90 are provided with a hole 15a, a hole 15b, and a hole 15c, respectively, as in the example illustrated in FIG. 28 and other drawings. The hole 15a to the hole 15c are each a hole (bore) through which a flexible substrate (or connector cable) passes, and can be referred to as a through-hole. The signal processing section 30 of the connector substrate 95 is electrically coupled to the connector 25 of the display block 80 via a flexible substrate (or connector cable).

The signal processing section 30 is electrically coupled to the drive section 40 via the flexible substrate (or connector cable) and the connector 25, and may transmit and receive signals such as a picture signal (image data) and a temperature signal (temperature information). As described above, for example, the signal processing section 30 generates a picture signal of each frame, and outputs the picture signal to each of the drive sections 40 via the flexible substrate and the connector 25.

As in the example illustrated in FIG. 29, the display block 80 has a plurality of screw holes 16a. The screw hole 16a is, for example, a non-through screw hole, and is provided in a substrate of the display block 80. In the example illustrated in FIG. 29, the screw hole 16a is provided in an upper region, a lower region, a left region, and a right region, with respect to a middle part of the display block 80.

The support member 85 has a plurality of screw holes 16b. The screw hole 16b is a through-hole, and is provided to penetrate the support member 85. The screw hole 16b is provided to correspond to the screw hole 16a of the display block 80. The screw hole 16b is formed at a position corresponding to the screw hole 16a. The screw hole 16b of the support member 85 has a size (diameter) that is larger than a size of the screw hole 16a. The screw hole 16b is formed around the hole 15a in the support member 85, for example, as in the example illustrated in FIG. 29 or other drawings.

The size of the screw hole 16b provided for the support member 85 is larger than the size of the screw hole 16a provided for the display block 80. This makes it possible to move the display block 80 while keeping a screw in a temporarily fixed state, and to adjust a position of the display block 80. It is possible to adjust the position of the display block 80, and thus to suppress generation of a gap between the plurality of display blocks 80 adjacent to each other.

A size (area) of the support member 85 may be smaller than the total of sizes of the plurality of display blocks 80 (e.g., four display blocks 80) attached to the support member 85, for example. This makes it possible to suppress the generation of a gap between the plurality of display blocks 80 adjacent to each other.

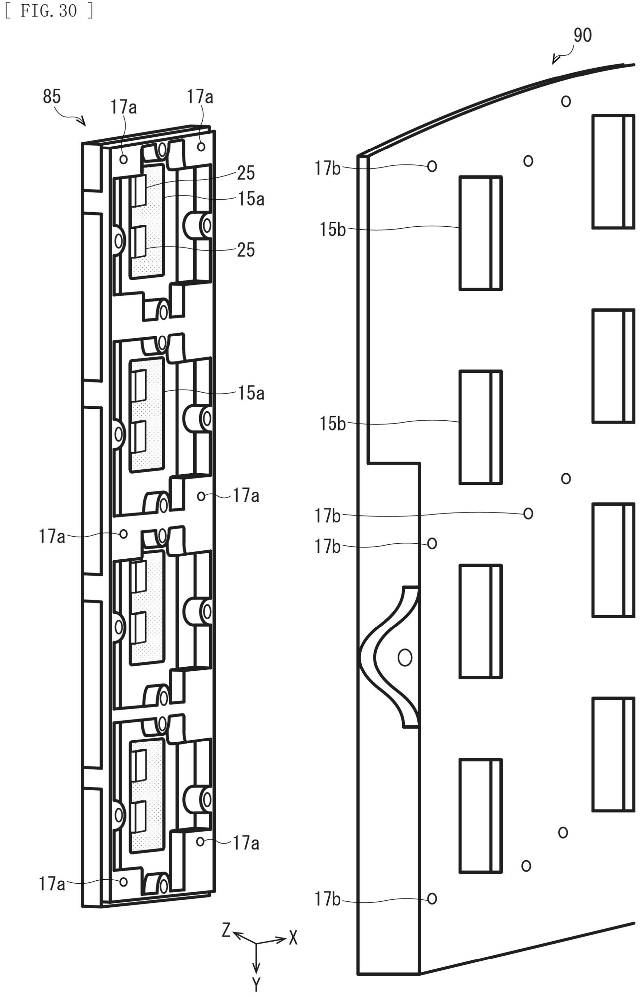

In addition, the support member 85 has a plurality of screw holes 17a. The screw hole 17a is a non-through screw hole, and may be provided near an upper side, near right and left sides, and near a lower side of the support member 85, for example, as in the examples illustrated in FIGs. 29 and 30. As an example, the support member 85 has six screw holes 17a, as illustrated in FIG. 30.

The support member 90 has a plurality of screw holes 17b. The screw hole 17b is a through-hole, and is provided to penetrate the support member 90. The screw hole 17b is provided to correspond to the screw hole 17a of the support member 85. The screw hole 17b is formed at a position corresponding to the screw hole 17a. The screw hole 17b has a size (diameter) that is larger than a size of the screw hole 17a.

The size of the screw hole 17b provided for the support member 90 is larger than the size of the screw hole 17a provided for the support member 85. This makes it possible to move the support member 85 while keeping a screw in a temporarily fixed state, and to adjust a position of the support member 85. It is possible to position each of the support members 85, and thus to improve the display quality of an image.

Next, description is given of an example of a method of assembling the display apparatus 1 illustrated in FIGs. 28 to 30. The display block 80 (panel) provided with the drive section 40 is positioned on the support member 85 which is a sub frame. A screw is inserted into the screw hole 16b and the screw hole 16a with a washer interposed therebetween, and the screw is fastened lightly to bring the display block 80 into a temporarily fixed state.

Moving the temporarily fixed display block 80 in a right-left direction (right-left direction of the vehicle 120 illustrated in FIG. 2 or other drawings) allows the position of the display block 80 to be adjusted, thus allowing the pixel arrangement (pixel position) to be adjusted in an up-down direction (front-rear direction of the vehicle 120). Then, after the temporarily fixed screw is further fastened, the position of the display block 80 is fixed by an adhesive using a thermosetting resin.

Next, the support member 85 mounted with the display block 80 is positioned on the support member 90 which is a main frame. Then, a screw is inserted into the screw hole 17b and the screw hole 17a with a washer interposed therebetween, and the screw is fastened lightly to bring the support member 85 into a temporarily fixed state.

Moving the temporarily fixed support member 85 in the up-down direction to adjust the position of the support member 85, thus allowing the pixel arrangement (pixel position) to be adjusted in the right-left direction. Then, after the temporarily fixed screw is further fastened, the position of the support member 85 is fixed using a thermosetting resin as an adhesive.

Next, one end of the flexible substrate is coupled to the connector 25 of the display block 80, and the other end of the flexible substrate is coupled to a connector (unillustrated) provided in the connector substrate 95. After the connector substrate 95 (connector frame) is attached to the support member 90, the shield cover is attached to the side of the back surface of the connector substrate 95. It is to be noted that configurations denoted by the same numbers (symbols) as the configurations of the foregoing embodiment or modification examples are similar to those of the foregoing embodiment or modification examples. Descriptions of the configurations of the same numbers as those of the foregoing embodiment and modification examples are the same as the descriptions of those of the embodiment or modification examples.

(2-4. Modification Example 4)

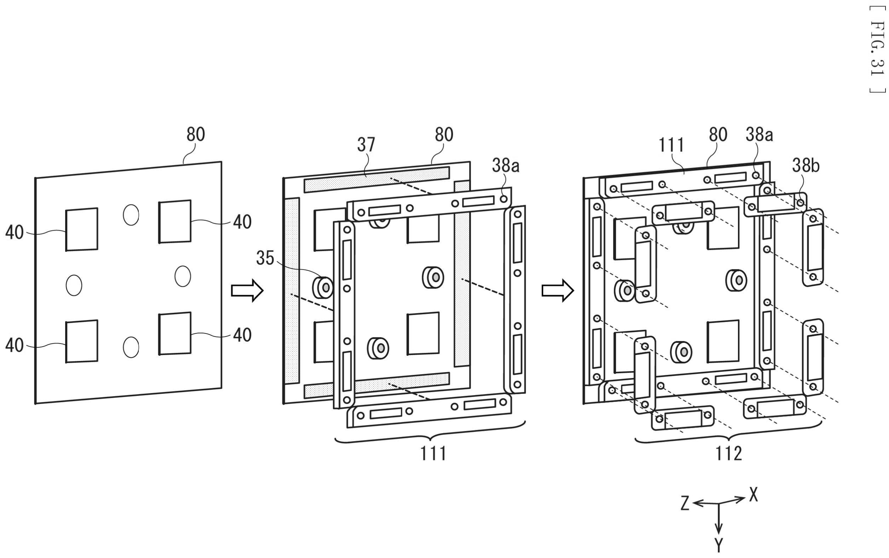

In the foregoing embodiment, the description has been given of the example in which the display apparatus 1 includes the support member 85 (sub frame), but the display apparatus 1 may be configured not to include the support member 85. FIGs. 31 to 34 are each an explanatory diagram of a configuration example of a display apparatus according to Modification Example 4. The display apparatus 1 may include, for example, a frame member 111, a frame member 112, and a frame member 113. It is to be noted that, in addition to this structure of Modification Example 4, a louver may be used as in Modification Example 1, or a polarizing plate may be used as in Modification Example 2. For example, the display apparatus 1 and the display system 200 may include the above-described louver 150, and may include the polarizing plate 160 and the $\lambda/2$ plate 165.

The frame member 111 is a member attachable to the display block 80. As an example, the frame member 111 is attached to the display block 80 by an adhesive 37 (e.g., an adhesive including a thermosetting resin), as illustrated in FIG. 31. For example, the frame member 111 is adhered to a peripheral part along the side of the display block 80 with the adhesive 37 interposed therebetween. In addition, the frame member 111 has a plurality of screw holes 38a. The screw hole 38a is, for example, a non-through screw hole.

In the example illustrated in FIG. 31, the display block 80 is mounted with four drive sections 40. In addition, a plurality of studs 35 is attached to the display block 80. The stud 35 is a component having a screw hole, and is used for attaching the support member 90. The stud 35 is fixed to the display block 80 using solder, for example. As an example, four studs 35 are arranged on the display block 80.

The frame member 112 is a member attachable to the frame member 111. The frame member 112 has a plurality of screw holes 38b. The screw hole 38b is a through-hole, and is provided to penetrate the frame member 112. The screw hole 38b is provided to correspond to the screw hole 38a of the frame member 111. A screw is inserted into the screw hole 38b and the screw hole 38a to allow the frame member 112 to be attached to the frame member 111.

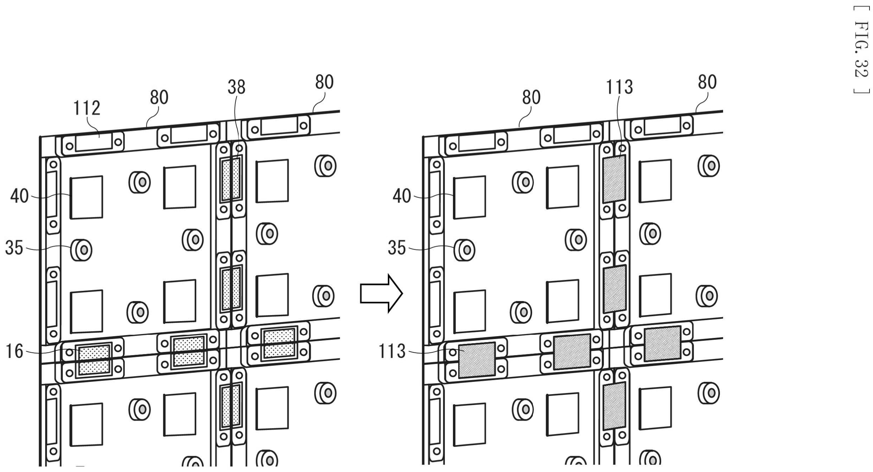

The frame member 113 is arranged to couple the plurality of adjacent display blocks 80 to each other, as in the example illustrated in FIG. 32. The frame member 113 is affixed by an adhesive 38 onto the frame member 112 between two adjacent display blocks 80, for example, as in the example schematically illustrated in FIG. 32. The two display blocks 80 adjacent to each other in the right-left direction (or up-down direction) are coupled (linked) to each other by the frame member 113.

The support member 90 is configured using a metal material, for example, and has high heat conduction efficiency. As an example, the support member 90 is provided with the above-described hole 15c for each of the display blocks 80. The hole 15c is a hole through which a flexible substrate (or connector cable) passes that electrically couples a connector disposed in the display block 80 and a connector disposed in the connector substrate 95.

The support member 90 is provided with a plurality of screw holes 36. The screw hole 36 is a through-hole, and is provided to penetrate the support member 90. The screw hole 36 is provided to correspond to the stud 35 of the display block 80. A screw is inserted into the screw hole 36 and a screw hole of the stud 35 to allow the display block 80 to be attached to the support member 90.

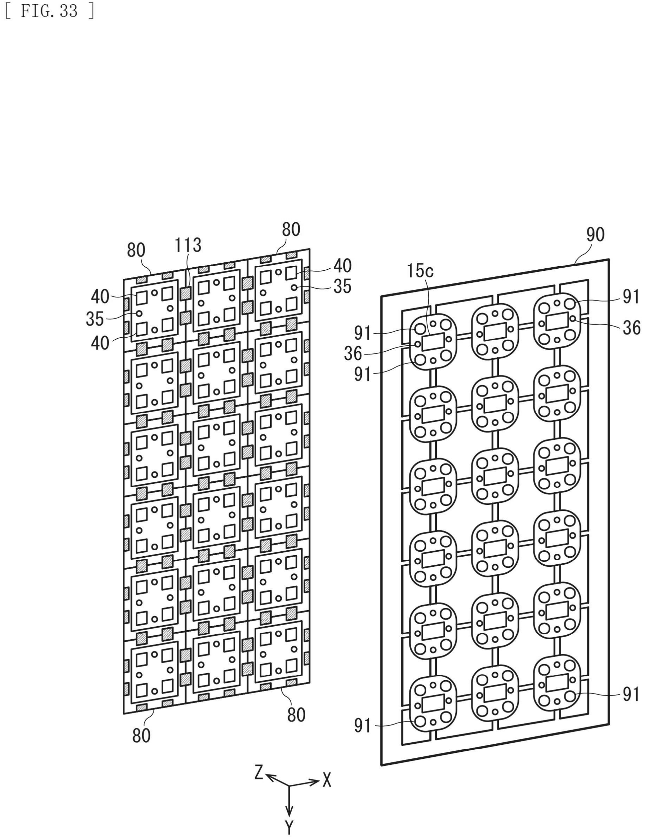

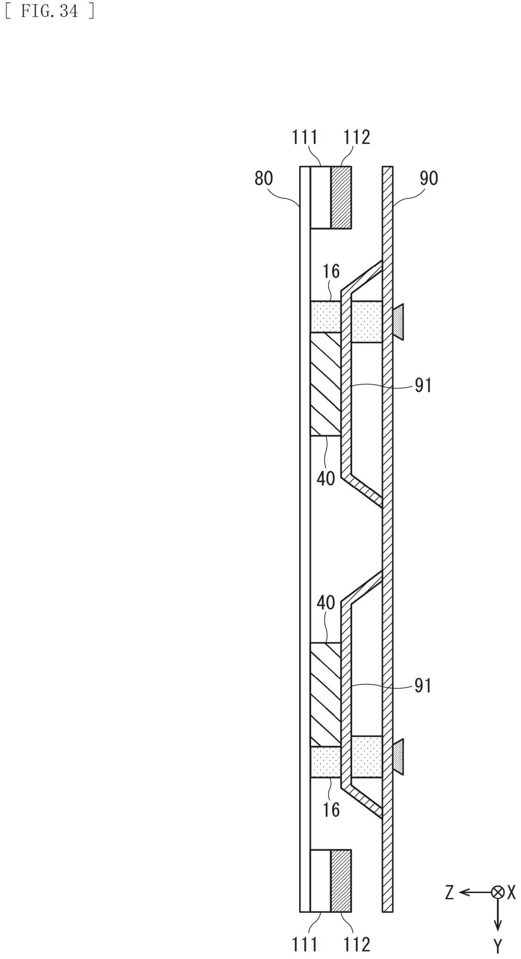

The plurality of display blocks 80 coupled to each other with the frame member 113 interposed therebetween is attached to the support member 90. The support member 90 may have a raised part 91 configured to be able to be in contact with the drive section 40, as in the example illustrated in FIGs. 33 and 34. The raised part 91 is a heat conduction part (heat conduction member), and is provided at a position corresponding to the drive section 40. The raised part 91 is a protruding structure part, and can also be referred to as a protruding part.

The raised part 91 (raised part region) is in contact with the drive section 40 of the display block 80, while allowing the display block 80 to be in a state of being attached to the support member 90. This makes it possible, for example, to diffuse (radiate) the heat of the drive section 40 (driver IC) to the entire support member 90. It is possible to suppress heat accumulation in the drive section 40, and thus to prevent thermal runaway.

Each of the plurality of display blocks 80 of the display apparatus 1 is coupled to another display block 80 by the frame member 113 or the like. The use of the frame member 113 enables attachment and detachment for each of the display blocks 80. It becomes possible to perform replacement, repair, or the like in units of the display blocks 80.

Next, description is given of an example of a method of assembling the display apparatus 1 illustrated in FIGs. 31 to 34. First, solder is used to dispose the stud 35 in the display block 80 mounted with the plurality of drive sections 40. Then, the adhesive 37 (e.g., a thermosetting resin) is used to attach the frame member 111 to the display block 80.

Next, the screw hole 38a of the frame member 111 and the screw hole 38b of the frame member 112 are positioned to each other. Then, a screw is attached to the screw hole 38b and the screw hole 38a to fix the frame member 112 to the frame member 111. Further, moving the display block 80 to thereby adjust the array (pixel position) of the pixels of each of the display blocks 80 in the up-down and right-left directions. Thereafter, the adhesive 38 is used to affix the frame member 113 to the frame member 112.

Then, after a screw is inserted into the screw hole 36 of the support member 90 and the screw hole of the stud 35 and the screw is fastened, an adhesive is used to fix the position of the display block 80 on the support member 90. Then, the flexible substrate is used to electrically couple the connector 25 (unillustrated in FIG. 33) of the display block 80 and a connector of the connector substrate 95 to each other. After the connector substrate 95 is attached to the support member 90, the shield cover is attached to the side of the back surface of the connector substrate 95. It is to be noted that descriptions of components of the same numbers as those in the foregoing embodiment and Modification Example 3 are the same as the descriptions of those in the embodiment and Modification Example 3.

(2-5. Modification Example 5)

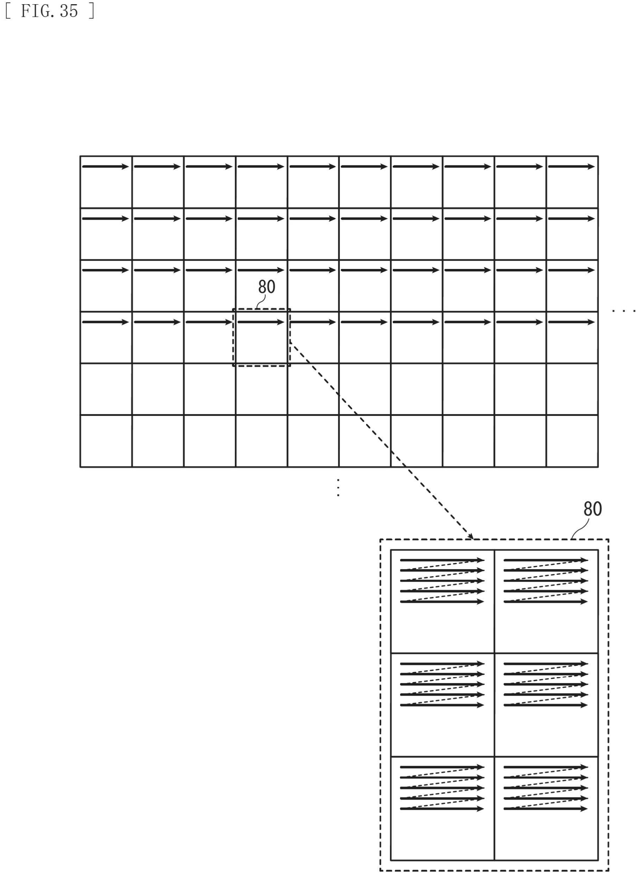

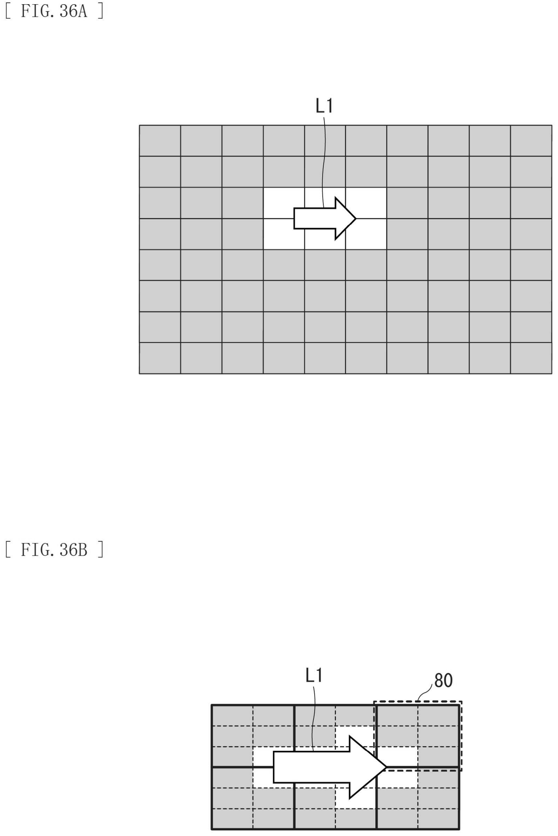

FIGs. 35 and 36 are each an explanatory diagram of an operation example of a display apparatus according to Modification Example 5. In the same manner as the cases of the foregoing embodiment and Modification Example 1 to Modification Example 4, the display apparatus 1 is configured to cause the respective drive sections 40 of the plurality of display blocks 80 to drive the light-emitting elements 10 of each of the pixels P and to be able to display an image in each of the display areas. The display apparatus 1 in this example may be one of the display apparatuses described in the foregoing embodiment and Modification Example 1 to Modification Example 4. In addition, the present operation example may be appropriately combined with the operation described in the embodiment.

For example, the control unit 20 (or the signal processing section 30) causes, for each of the display blocks 80, the drive section 40 to control the light-emitting elements 10 of each of the pixels P to thereby cause the drive section 40 to perform sequential scanning in corresponding units of regions and to display an image. In addition, in a case where the plurality of drive sections 40 are provided for each of the display blocks 80, the control unit 20 may be configured to be able to individually control the plurality of drive sections 40 for each of the display blocks 80.

As in the example schematically illustrated in FIG. 35, the signal processing section 30 of the control unit 20 may control the plurality of drive sections 40 (e.g., six drive sections 40) for each of the display blocks 80, and may perform image control to scan (perform scanning on) each of the display areas. Individually controlling the plurality of drive sections 40 in each of the display blocks 80 makes it possible to perform image control in units of finer areas, and thus to achieve lower power consumption.

The signal processing section 30 is configured to be able to control a state of the drive section 40 of each of the display blocks 80 in accordance with a picture signal (image data) of an image to be displayed. For example, the signal processing section 30 may set the drive section 40 of an unused display block 80, which serves as a black display region, among the plurality of display blocks 80 to be in a standby state (standby mode) described above.

For example, in a case where an arrow L1 is displayed as illustrated in FIG. 36A, the signal processing section 30 sets the drive section 40 in the display block 80, other than the display blocks 80 (six display blocks 80 in FIG. 36A) that display an image of the arrow L1, to be in a standby state. In addition, as schematically illustrated in FIG. 36B, the signal processing section 30 may operate some of the drive sections 40 corresponding to the region of the arrow L1, among the plurality of drive sections 40 of the respective display blocks 80, and may bring the other drive sections 40 into a standby state.

It is to be noted that the drive sections 40 of the respective display blocks 80 may each include a terminal (STANDBY terminal) to be used to set the standby state. For example, the signal processing section 30 may control a voltage of the STANDBY terminal to be inputted to the drive section 40 to thereby set the drive section 40 to be in a standby state.

Determination may be made as to whether or not the drive section 40 transitions to the standby state. For example, in a case where a picture signal in a certain frame is a signal indicating all black and where a picture signal in the next frame is not received, the drive section 40 may transition to the standby state. Controlling the state of the drive section 40 as described above makes it possible to reduce the power consumption of the display apparatus 1.

(2-6. Modification Example 6)

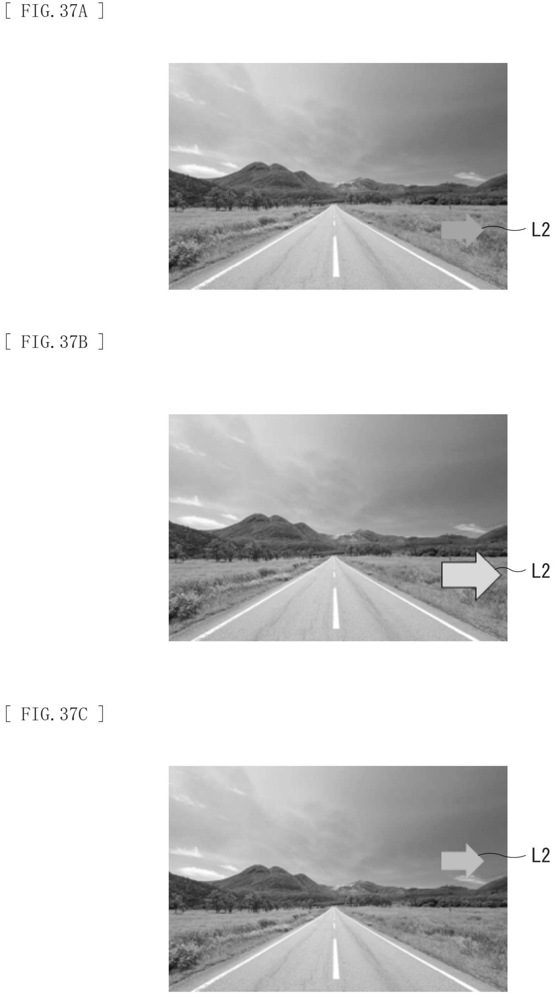

FIGs. 37A to 37C are each an explanatory diagram of an operation example of a display apparatus according to Modification Example 6. The display apparatus 1 of this example may be one of the display apparatuses described in the foregoing embodiment and Modification Example 1 to Modification Example 4. The control unit 20 may be configured to be able to control luminance (brightness) of an image, color of the image, a display position of the image, and the like on the basis of brightness around the vehicle 120. For example, the control unit 20 (or the signal processing section 30) may use sensor signals outputted from a camera, an image sensor, and the like of the sensor unit 70 to grasp brightness, color, and the like of a scene (background) outside the vehicle in each of the display areas, and may adjust luminance, color, size, and the like of an image to be displayed. In addition, the present operation example may be used in a manner appropriately combined with the operation described as another example as in the embodiment or Modification Example 5.

The control unit 20 is configured to be able to control the supply of a current to the light-emitting element 10 of the display block 80 on the basis of a sensor signal related to the brightness around the vehicle 120. For example, the control unit 20 may be configured to adjust a value for each pixel (pixel value) of an image on the basis of the sensor signal to control the light-emitting element 10.

The control unit 20 may acquire, as a sensor signal, a picture signal (image data) obtained by shooting the outside of the vehicle by a camera (image sensor), and may control the light-emitting elements 10 of each of the display blocks 80 depending on brightness and color around the vehicle 120 indicated by the sensor signal. It becomes possible to control the light emission of each of the light-emitting elements 10 depending on the brightness or the like around the vehicle 120, and thus to secure visibility of the image.

In the case of the example illustrated in FIG. 37A, an image of an arrow L2 is displayed that has the same color as that of grass in a region of grass near the road, which causes a user (observer) to have difficulty in seeing the arrow L2 in some cases. In the example illustrated in FIG. 37A, the arrow L2 is in a state of blending into the background grass region.

For example, the signal processing section 30 of the control unit 20 may adjust a current to be supplied by the drive section 40 to the light-emitting element 10 to perform processing to increase luminance of the image of the arrow L2. In addition, the signal processing section 30 may perform processing such as edging of the arrow L2 and size changing of the arrow L2 depending on the brightness and the color around the vehicle 120. Performing such processing makes it possible to improve visibility of the image of the arrow L2, as in the example illustrated in FIG. 37B.

In addition, the signal processing section 30 may perform processing to adjust the display position of the image depending on the brightness or the like outside the vehicle. As an example, the signal processing section 30 may change the display position of the image of the arrow L2 from the grass region to the air region, as illustrated in FIG. 37C. Displaying the arrow L2 in a display area having a color different from the color of the arrow L2 makes it possible to enhance visibility of the arrow L2.

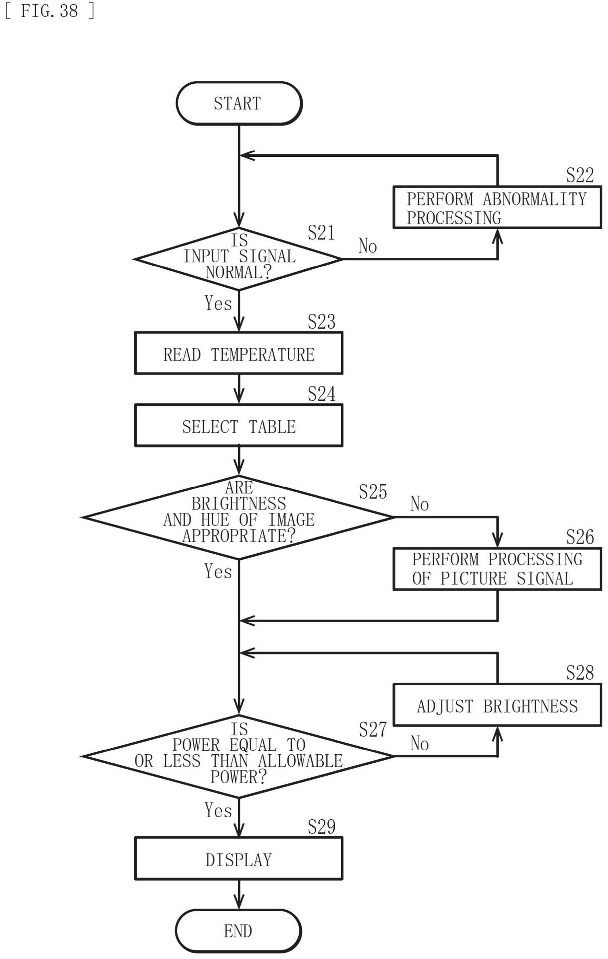

FIG. 38 is a flowchart illustrating an operation example of a display system according to Modification Example 6. Description is given of the operation example of the display system 200 with reference to the flowchart of FIG. 38. For example, in a case where a picture signal S1 for displaying is inputted to the display apparatus 1 after activation of an application of the display apparatus 1, the flowchart of FIG. 38 is started.

For example, the control unit 20 of the display apparatus 1 refers to the setting tables stored in the storage 31 (or the storage 41), and selects and sets a threshold and a setting table to serve as an initial setting. In addition, the control unit 20 acquires, from the sensor unit 70, a picture signal S2 that is a sensor signal obtained by shooting an area or the like ahead of the vehicle 120.

In step S21, the control unit 20 determines whether or not the inputted picture signal S1 is normal. In a case where a determination result in step S21 is negative ("No" in step S21), the processing proceeds to step S22. For example, in a case where the picture signal S1 is a signal indicating an all white screen for a certain period of time, i.e., a signal indicating that all the light-emitting elements 10 are driven at 100% current IF that is a maximum current, the control unit 20 makes a negative determination in step S21.

In step S22, the control unit 20 performs abnormality processing. The control unit 20 notifies the user that abnormality has been detected, for example, by an indicator, sound, an image, or the like. After step S22, the processing returns to step S21.

In a case where the determination result in step S21 is affirmative ("Yes" in step S21), the processing proceeds to step S23. In step S23, the control unit 20 acquires a temperature signal generated by the temperature sensor 45, and reads an ambient temperature. After step S23, the processing proceeds to step S24. In step S24, the control unit 20 selects a setting table depending on a temperature indicated by the temperature signal, and sets and updates the setting table.

In step S25, the control unit 20 determines whether or not the brightness of an image indicated by the picture signal S1 is darker than the brightness of an image indicated by the picture signal S2 (background image), and whether or not a hue of the image indicated by the picture signal S1 is close to a hue of the image indicated by the picture signal S2. In a case where the determination result in step S25 is affirmative ("Yes" in step S25), the processing proceeds to step S27.

In a case where the determination result in step S25 is negative ("No" in step S25), the processing proceeds to step S26. In a case where it is determined in step S25 that the brightness of the image indicated by the picture signal S1 is darker than the brightness of the image indicated by the picture signal S2, the processing proceeds to step S26.

In addition, also in a case where it is determined in step S25 that the hue of the image indicated by the picture signal S1 is close to the hue of the image indicated by the picture signal S2, the processing proceeds to step S26. In step S26, the control unit 20 performs processing to improve visibility on the picture signal S1, such as processing to change brightness, size, and the like of the image indicated by the picture signal S1, and processing to change the display position of the image.

In step S27, the control unit 20 calculates power consumption of the display apparatus 1 in a case where the image indicated by the picture signal S1 is displayed. In addition, in step S27, the control unit 20 determines whether or not the calculated power consumption is equal to or less than allowable power. In a case where the determination result in step S27 is affirmative ("Yes" in step S27), the processing proceeds to step S29.

In a case where the determination result in step S27 is negative ("No" in step S27), the processing proceeds to step S28. In step S28, the control unit 20 performs processing to adjust the brightness of the image indicated by the picture signal S1 to allow the power consumption of the display apparatus 1 to be equal to or less than the allowable power. After step S28, the processing returns to step S27.

In step S29, the control unit 20 supplies the current IF to each of the light-emitting elements 10 on the basis of the picture signal S1 and the setting table set in step S24 to thereby control the light emission of each of the light-emitting elements 10 and display the image.

After step S29, the display system 200 finishes the processing illustrated in the flowchart of FIG. 38. It is to be noted that, in a case where the picture signal S1 is inputted to the signal processing section 30, the control unit 20 of the display apparatus 1 may re-execute the processing illustrated in the flowchart of FIG. 38.

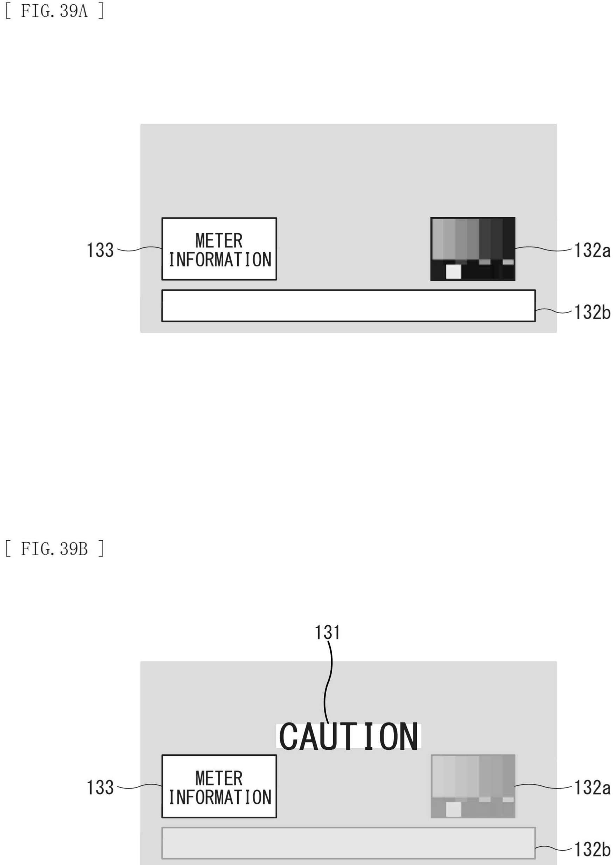

FIGs. 39A and 39B are each an explanatory diagram of another operation example of the display apparatus according to Modification Example 6. The control unit 20 may perform image control on the basis of an allowable value of power and brightness around the vehicle 120. The control unit 20 (or the signal processing section 30) is configured to be able to control luminance (brightness) of the image, color of the image, size of the image, and the like, for example, on the basis of the allowable value of the output power (power consumption) set in the vehicle 120.

The signal processing section 30 of the control unit 20 is configured to control the supply of a current to the light-emitting elements 10 of each of the display blocks 80 depending on the allowable value of power. For example, the signal processing section 30 may set a pixel value of each of the pixels not to allow the power consumption of the display apparatus 1 to exceed the allowable value, and may adjust a current to be supplied to each of the light-emitting elements 10.

For example, the signal processing section 30 sets, as an allowable value P1, a smaller value, among an allowable value Pa of the power set in the vehicle 120 and an allowable value Pb of the power calculated by the display apparatus 1. The signal processing section 30 may perform image control not to allow the power consumption (power usage) of the display apparatus 1 to exceed the allowable value P1. The allowable value Pa is, for example, an available power value that is set on the basis of a state of the vehicle 120. The allowable value Pa varies depending on a remaining battery amount, an operation mode, and the like.

The allowable value Pb is, for example, a limit value of power usage set for protection of a device, and is determined by the display apparatus 1 on the basis of the ambient temperature. As an example, the control unit 20 (or the signal processing section 30) sets the allowable value Pb depending on the above-described temperature signal (temperature information). If a large amount of current is applied to the device in a case where the device is in an abnormally high temperature state, the device may possibly malfunction or be destroyed. Accordingly, in a case where the ambient temperature becomes higher, for example, the signal processing section 30 adjusts the allowable value Pb of the power to be smaller.

In addition, the signal processing section 30 is configured to be able to control the brightness (luminance) of an image on the basis of priority of the image. For example, the signal processing section 30 may perform processing to decrease the brightness of the image with lower priority among a plurality of types of images to be displayed. The brightness of the image with lower priority is decreased while securing the brightness of an image with higher priority (of importance) in a state where the available power value is set, thereby making it possible to set the power consumption to a value equal to or less than the allowable value P1.

In the example illustrated in FIG. 39A, the display apparatus 1 displays images 132a and 132b (e.g., a still image content or a moving image content with lower priority) and an image 133 of meter information in a manner superposed on a real image ahead of the vehicle 120. In a case where the warning mark 131 (Caution) is displayed as illustrated in FIG. 39B, the signal processing section 30 performs processing to decrease luminance of the images 132a and 132b with lower priority than that of the warning mark 131.

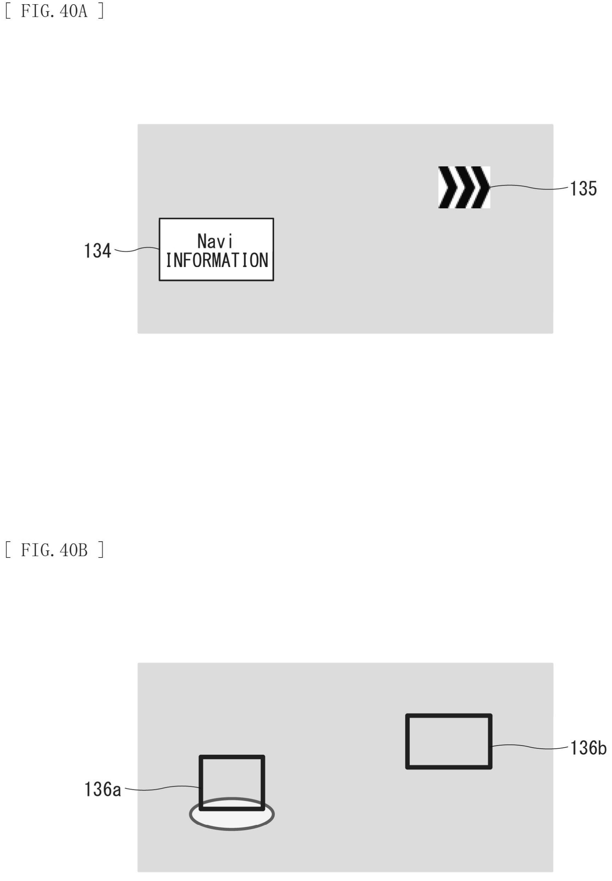

It becomes possible to limit the power consumption to a value equal to or less than the allowable value P1 while securing the brightness of the image of the warning mark 131 with higher priority. It is to be noted that examples of the image with higher priority include, in addition to the warning mark 131, an image 134 of navigational information, a marker 135 for right turn (or left turn), and images 136a and 136b indicating object detection, which are illustrated in FIGs. 40A and 40B.

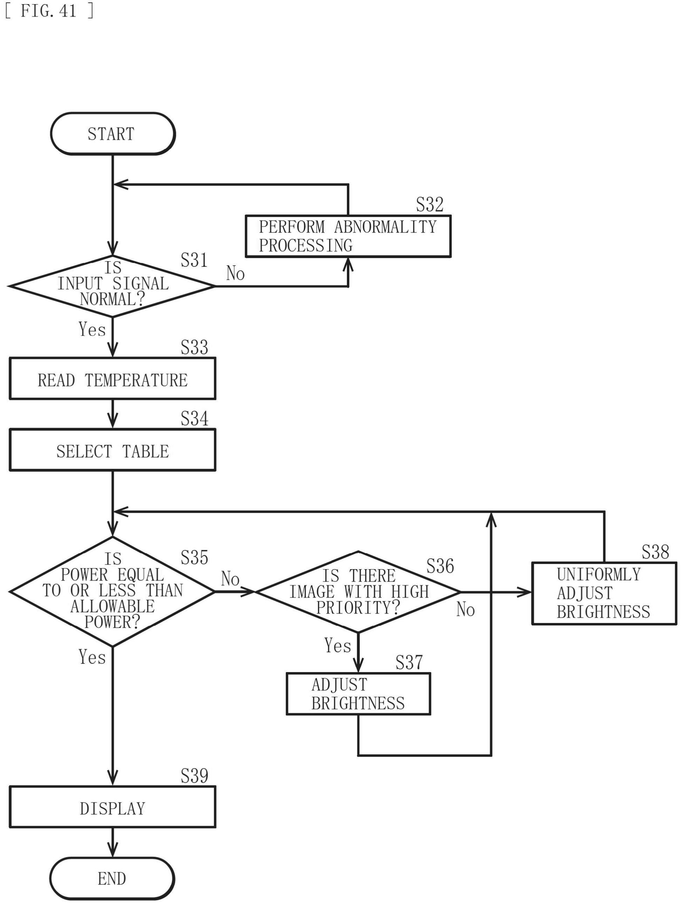

FIG. 41 is a flowchart illustrating an operation example of the display system according to Modification Example 6. Description is given of an operation example of the display system 200 with reference to the flowchart of FIG. 41. For example, in a case where a picture signal is inputted to the display apparatus 1 after activation of an application of the display apparatus 1, the flowchart of FIG. 41 is started.

In step S31, the control unit 20 determines whether or not an inputted picture signal is normal. In a case where the determination result in step S31 is negative ("No" in step S31), the processing proceeds to step S32. In step S32, the control unit 20 performs abnormality processing. After step S32, the processing returns to step S31.

In a case where the determination result in step S31 is affirmative ("Yes" in step S31), the processing proceeds to step S33. In step S33, the control unit 20 acquires a temperature signal generated by the temperature sensor 45, and reads an ambient temperature. After step S33, the processing proceeds to step S34. In step S34, the control unit 20 selects a setting table depending on a temperature indicated by the temperature signal, and sets and updates the setting table.

In step S35, the control unit 20 calculates power consumption of the display apparatus 1 in a case where an image indicated by the picture signal is displayed. In addition, in step S35, the control unit 20 determines whether or not the calculated power consumption is equal to or less than the allowable value P1. In a case where the determination result in step S35 is affirmative ("Yes" in step S35), the processing proceeds to step S39. In a case where the determination result in step S35 is negative ("No" in step S35), the processing proceeds to step S36.

In step S36, the control unit 20 determines whether or not an image with higher priority is included in the image indicated by the picture signal. In a case where the determination result in step S36 is affirmative ("Yes" in step S36), the processing proceeds to step S37. In a case where the determination result in step S36 is negative ("No" in step S36), the processing proceeds to step S38.

In step S37, the control unit 20 performs processing to adjust the brightness of images other than the image with higher priority to allow the power consumption of the display apparatus 1 to be equal to or less than the allowable value P1. After step S37, the processing returns to step S35. In step S38, the control unit 20 performs processing to uniformly adjust the brightness of the entire image indicated by the picture signal to allow the power consumption of the display apparatus 1 to be equal to or less than the allowable value P1. After step S38, the processing returns to step S35.

In step S39, the control unit 20 supplies the current IF to each of the light-emitting elements 10 on the basis of the picture signal and the setting table set in step S34 to thereby control the light emission of each of the light-emitting elements 10 and display the image.

After step S39, the display system 200 finishes the processing illustrated in the flowchart of FIG. 41. It is to be noted that, in a case where a picture signal is inputted to the signal processing section 30, the control unit 20 of the display apparatus 1 may re-execute the processing illustrated in the flowchart of FIG. 41.

(2-7. Modification Example 7)

In the foregoing embodiment and modification examples, the description has been given of the configuration examples of the display system 200 and the display apparatus 1, which however are merely exemplary; the configurations of the display system 200 and the display apparatus 1 are not limited to the above-described examples. For example, it may be possible to adopt, as the reflective member 121, a reflective member other than the windshield, such as a rear window, a reflective plate (combiner), or a ceiling window, for example. In addition, the light-emitting element 10 may be an organic EL (Electro Luminescence) element. In addition, a liquid crystal display element may be used as the light-emitting element 10.

In the foregoing embodiment, the description has been given of the example in which the support member 85 (sub frame) with the display block 80 being attached thereto is attached to the support member 90 (main frame). The display block 80 need not necessarily be attached to the support member 90 with the support member 85 interposed therebetween, but may be directly attached to the support member 90.

(2-8. Modification Example 8)

The display system and the display apparatus of the present disclosure are applicable to various types of vehicles. For example, as in the technology disclosed in the foregoing embodiment and modification examples, the technology according to the present disclosure is applicable to various vehicles, such as a BEV (battery electric vehicle), an HEV (Hybrid Electric Vehicle), and a PHV (Plug-in Hybrid Vehicle). The technology according to the present disclosure may be applied to a vehicle that is adaptable to automated driving at Level 2 or more or at Level 4 or more. In addition, the display system and the display apparatus of the present disclosure may not only be used during traveling, but also be used during parking or stopping.

<3. Practical Application Example>

(Example of Practical Application to Mobile Body)

The technology (the present technology) according to the present disclosure is applicable to a variety of products. For example, the technology according to the present disclosure may be achieved as a device mounted on any type of mobile body such as an automobile, an electric vehicle, a hybrid electric vehicle, a motorcycle, a bicycle, a personal mobility, an aircraft, a drone, a vessel, or a robot.

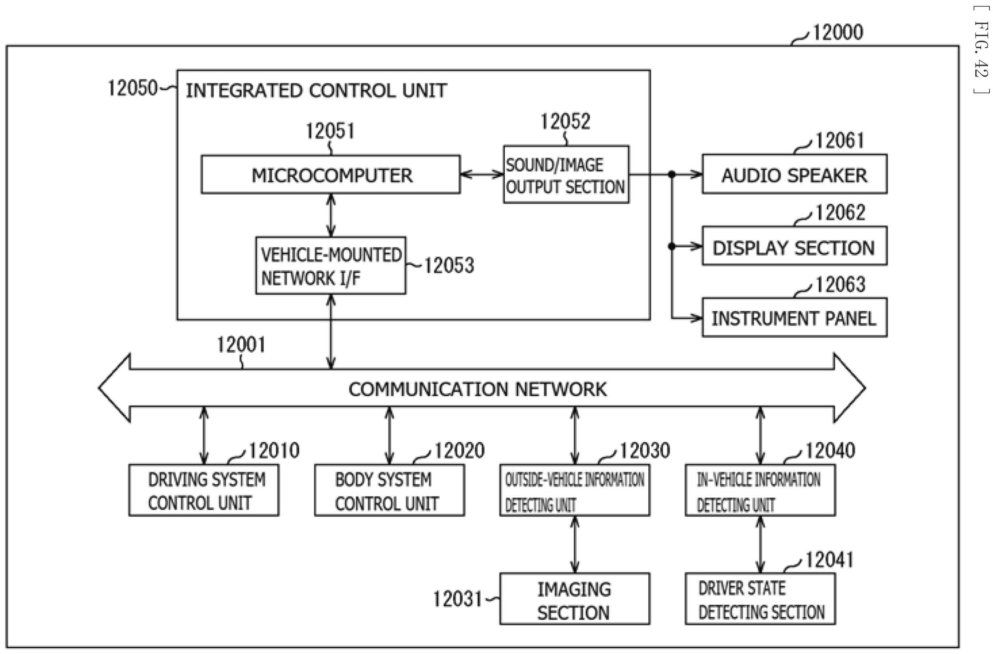

FIG. 42 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 42, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 42, an audio speaker 12061, a display section 12062, and an instrument panel 12063 are illustrated as the output device. The display section 12062 may, for example, include at least one of an on-board display and a head-up display.

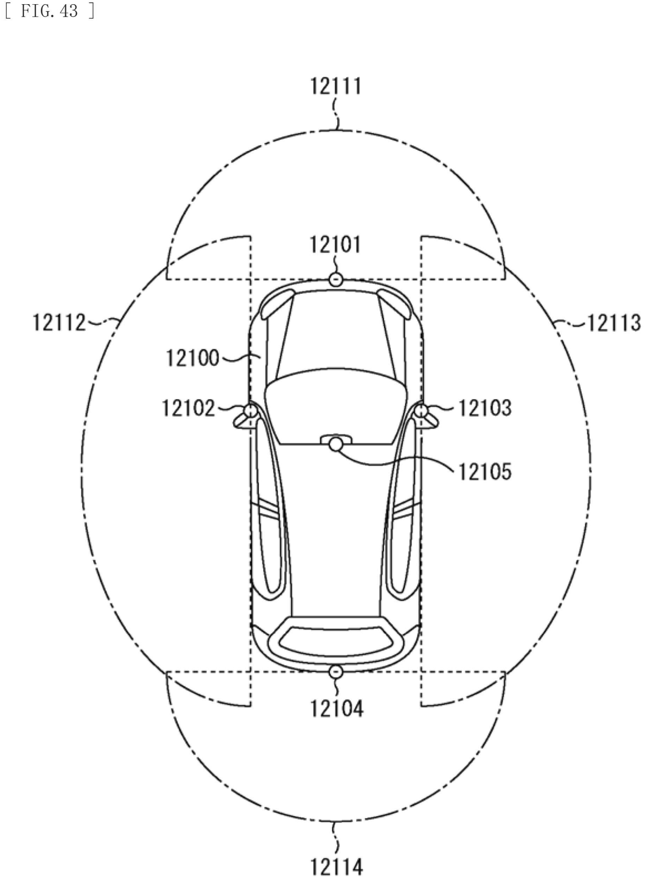

FIG. 43 is a diagram depicting an example of the installation position of the imaging section 12031.

In FIG. 43, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 43 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/-image output section 12052 may also control the display section 12062 so that an icon or the like representing the pedestrian is displayed at a desired position.

The description has been given hereinabove of the mobile body control system to which the technology according to an embodiment of the present disclosure is applicable. The technology according to an embodiment of the present disclosure is applicable to the display section 12062, for example, of the configurations described above. Specifically, for example, the display apparatus 1 or the like is applicable to the display section 12062. Applying the technology according to an embodiment of the present disclosure to the display section 12062 enables achievement of a driving assistance and a driving experience that are suitable in the mobile body control system.

Although the description has been given hereinabove of the present disclosure with reference to the embodiment, the modification examples, and the practical application example, the present technology is not limited to the foregoing embodiment and the like, and may be modified in a wide variety of ways. For example, although the foregoing modification examples have been described as modification examples of the foregoing embodiment, the configurations of the respective modification examples may be combined as appropriate.

It is to be noted that the effects described herein are merely exemplary and are not limited to the description, and may further include other effects. In addition, the present disclosure may also have the following configurations.

(1) A display apparatus including:

a first display block including a plurality of light-emitting elements provided to be arrayed in a first direction and a second direction intersecting the first direction; and
a second display block including a plurality of light-emitting elements provided to be arrayed in the first direction and the second direction, in which
the first display block and the second display block are arranged adjacent to each other in the first direction, and are shifted from each other by a predetermined amount in the second direction.

(2) The display apparatus according to (1), in which

the first display block and the second display block include a plurality of pixels each including the light-emitting elements, and
the first display block and the second display block are shifted from each other in the second direction in units of one pixel or in units of a plurality of pixels.

(3) The display apparatus according to (1) or (2), in which a shifting amount between the first display block and the second display block is a value based on a shape of a portion of a reflective member that reflects light from the light-emitting elements.

(4) The display apparatus according to any one of (1) to (3), in which the shifting amount between the first display block and the second display block is a value based on a shape of a portion of a curved surface of a windshield which is the reflective member that reflects light from the light-emitting elements.

(5) The display apparatus according to any one of (1) to (4), including a plurality of display blocks including the first display block and the second display block and being arranged in the first direction and the second direction.

(6) The display apparatus according to any one of (1) to (5), including a plurality of first support members each including a plurality of display blocks arrayed in the second direction.

(7) The display apparatus according to (6), including a second support member including the plurality of first support members arranged continuously in the first direction.

(8) The display apparatus according to (7), in which the plurality of first support members is arranged along a curved surface of the second support member.

(9) The display apparatus according to any one of (1) to (8), in which

the first display block and the second display block include a plurality of pixels each including the light-emitting elements, and
each of the plurality of pixels includes a lens that condenses light from the light-emitting elements.

(10) The display apparatus according to (9), in which a center position of the lens differs from a center position of the light-emitting elements in a plane orthogonal to a stacking direction of the light-emitting elements and the lens.

(11) The display apparatus according to any one of (1) to (10), including a protective member provided to cover the light-emitting elements, in which

the protective member is configured by a transparent resin, a white resin, a black resin, or a mixed resin.

(12) The display apparatus according to any one of (1) to (11), including a light-blocking member provided to cover a periphery of the light-emitting elements.

(13) The display apparatus according to any one of (1) to (12), in which the first display block and the second display block each include a drive circuit configured to drive the light-emitting elements.

(14) The display apparatus according to any one of (1) to (13), in which each of the light-emitting elements includes a light emitting diode.

(15) The display apparatus according to any one of (1) to (14), in which an area of the plurality of light-emitting elements in a region corresponding to pixels of an image is within a range of 20% or more and 30% or less with respect to an area of the region.

(16) The display apparatus according to any one of (1) to (15), including the first support members to which the plurality of display blocks including the first display block is attached, in which

the display blocks have a first screw hole,
the first support members have a second screw hole provided to correspond to the first screw hole, and
a size of the second screw hole is larger than a size of the first screw hole.

(17) The display apparatus according to (16), including the second support member to which the plurality of first support members is attached, in which

the first support members have a third screw hole,
the second support member has a fourth screw hole provided to correspond to the third screw hole, and
a size of the fourth screw hole is larger than a size of the third screw hole.

(18) The display apparatus according to any one of (1) to (15), including a frame member arranged to couple a plurality of adjacent display blocks to each other.

(19) The display apparatus according to (18), including the second support member including the plurality of display blocks coupled to each other with the frame member being interposed therebetween.

(20) The display apparatus according to (19), in which

each of the plurality of display blocks includes the plurality of light-emitting elements and the drive circuit configured to drive the light-emitting elements, and
the second support member is configured using a metal material, and has a raised part configured to be in contact with the drive circuit of the display blocks.

(21) A display system including:

a display apparatus; and
a reflective member that reflects light from the display apparatus,
the display apparatus including

a first display block including a plurality of light-emitting elements provided to be arrayed in a first direction and a second direction intersecting the first direction, and
a second display block including a plurality of light-emitting elements provided to be arrayed in the first direction and the second direction, in which

the first display block and the second display block are arranged adjacent to each other in the first direction, and are shifted from each other by a predetermined amount in the second direction.

(22) The display system according to (21), in which

the first display block and the second display block include a plurality of pixels each including the light-emitting elements, and
the first display block and the second display block are shifted from each other in the second direction in units of one pixel or in units of a plurality of pixels.

(23) The display system according to (21) or (22), in which

the reflective member includes the windshield of the vehicle, and
the first display block and the second display block are arranged along a curved surface of the windshield.

(24) The display system according to any one of (21) to (23), in which

the reflective member includes the windshield of the vehicle, and
the display apparatus is provided on a dashboard or in the dashboard of the vehicle from one side to the other side of the windshield.

(25) The display system according to any one of (21) to (24), including a louver provided on the display apparatus.

(26) The display system according to any one of (21) to (25), including:

a polarizing plate provided on the display apparatus; and

a $\lambda/2$ plate provided on a windshield which is the reflective member.

(27) The display system according to any one of (21) to (26), in which an area of the plurality of light-emitting elements in a region corresponding to pixels of an image is within a range of 20% or more and 30% or less with respect to an area of the region.

(28) The display system according to any one of (21) to (27), including the first support members to which the plurality of display blocks including the first display block is attached, in which

the display blocks have a first screw hole,
the first support members have a second screw hole provided to correspond to the first screw hole, and
a size of the second screw hole is larger than a size of the first screw hole.

(29) The display system according to (28), including the second support member to which the plurality of first support members is attached, in which

the first support members have a third screw hole,
the second support member has a fourth screw hole provided to correspond to the third screw hole, and
a size of the fourth screw hole is larger than a size of the third screw hole.

(30) The display system according to any one of (21) to (27), including a frame member arranged to couple a plurality of adjacent display blocks to each other.

(31) The display system according to (30), including the second support member including the plurality of display blocks coupled to each other with the frame member being interposed therebetween.

(32) The display system according to (31), in which

each of the plurality of display blocks includes the plurality of light-emitting elements and the drive circuit configured to drive the light-emitting elements, and
the second support member is configured using a metal material, and has a raised part configured to be in contact with the drive circuit of the display blocks.

The present application claims the benefit of Japanese Priority Patent Application JP2022-212774 filed with the Japan Patent Office on December 28, 2022, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

**Claims**

1.  A display apparatus comprising:

    a first display block including a plurality of light-emitting elements provided to be arrayed in a first direction and a second direction intersecting the first direction; and
    a second display block including a plurality of light-emitting elements provided to be arrayed in the first direction and the second direction, wherein
    the first display block and the second display block are arranged adjacent to each other in the first direction, and are shifted from each other by a predetermined amount in the second direction.

2.  The display apparatus according to claim 1, wherein

    the first display block and the second display block include a plurality of pixels each including the light-emitting elements, and
    the first display block and the second display block are shifted from each other in the second direction in units of one pixel or in units of a plurality of pixels.

3.  The display apparatus according to claim 1, wherein a shifting amount between the first display block and the second display block is a value based on a shape of a portion of a reflective member that reflects light from the light-emitting elements.

4.  The display apparatus according to claim 1, wherein a shifting amount between the first display block and the second display block is a value based on a shape of a portion of a curved surface of a windshield which is a reflective member that reflects light from the light-emitting elements.

5.  The display apparatus according to claim 1, comprising a plurality of display blocks including the first display block and the second display block and being arranged in the first direction and the second direction.

6. The display apparatus according to claim 1, comprising a plurality of first support members each including a plurality of display blocks arrayed in the second direction.

7. The display apparatus according to claim 6, comprising a second support member including the plurality of first support members arranged continuously in the first direction.

8. The display apparatus according to claim 7, wherein the plurality of first support members is arranged along a curved surface of the second support member.

9. The display apparatus according to claim 1, wherein

the first display block and the second display block include a plurality of pixels each including the light-emitting elements, and
each of the plurality of pixels includes a lens that condenses light from the light-emitting elements.

10. The display apparatus according to claim 9, wherein a center position of the lens differs from a center position of the light-emitting elements in a plane orthogonal to a stacking direction of the light-emitting elements and the lens.

11. The display apparatus according to claim 1, comprising a protective member provided to cover the light-emitting elements, wherein
the protective member is configured by a transparent resin, a white resin, a black resin, or a mixed resin.

12. The display apparatus according to claim 1, comprising a light-blocking member provided to cover a periphery of the light-emitting elements.

13. The display apparatus according to claim 1, wherein the first display block and the second display block each include a drive circuit configured to drive the light-emitting elements.

14. The display apparatus according to claim 1, wherein each of the light-emitting elements comprises a light emitting diode.

15. A display system comprising:

a display apparatus; and
a reflective member that reflects light from the display apparatus,

the display apparatus including

a first display block including a plurality of light-emitting elements provided to be arrayed in a first direction and a second direction intersecting the first direction, and
a second display block including a plurality of light-emitting elements provided to be arrayed in the first direction and the second direction, wherein

the first display block and the second display block are arranged adjacent to each other in the first direction, and are shifted from each other by a predetermined amount in the second direction.

16. The display system according to claim 15, wherein

the first display block and the second display block include a plurality of pixels each including the light-emitting elements, and
the first display block and the second display block are shifted from each other in the second direction in units of one pixel or in units of a plurality of pixels.

17. The display system according to claim 15, wherein

the reflective member comprises a windshield of a vehicle, and
the first display block and the second display block are arranged along a curved surface of the windshield.

18. The display system according to claim 15, wherein

the reflective member comprises a windshield of a vehicle, and
the display apparatus is provided on a dashboard or in the dashboard of the vehicle from one side to the other side of the windshield.

19. The display system according to claim 15, comprising a louver provided on the display apparatus.

20. The display system according to claim 15, comprising:

a polarizing plate provided on the display apparatus; and
a $\lambda/2$ plate provided on a windshield which is the reflective member.

[ FIG. 1 ]

[ FIG. 2 ]

[ FIG. 3 ]

**EP 4 645 290 A1**

[ FIG. 4A ]

[ FIG. 4B ]

**30**

[ FIG. 5A ]

[ FIG.5B ]

101, 11S2

| | |
|---|---|
| 40 | 40 |
| Driver IC | Driver IC |
| 40 | 40 |
| Driver IC | Driver IC |
| 40 | 40 |
| Driver IC | Driver IC |
| 40 | 40 |
| Driver IC | Driver IC |

X

Y

[ FIG. 6A ]

RGB ARRANGEMENT

[ FIG. 6B ]

RGB ARRANGEMENT

[ FIG.6C ]

P          P

10r   10g   10b

| R | G | B | R | G | B |

| B | R | G | B | R | G |          RGB ARRANGEMENT

| G | B | R | G | B | R |

[ FIG.6D ]

P          P

10r   10g

| R | G | R | G |          RG-GB ARRANGEMENT

10g   10b

| G | B | G | B |

[ FIG.6E ]

Red SINGLE COLOR

[ FIG.6F ]

Blue SINGLE COLOR

[ FIG.6G ]

Green SINGLE COLOR

[ FIG. 6H ]

[ FIG. 6I ]

[ FIG. 7A ]

[ FIG. 7B ]

[ FIG. 7C ]

[ FIG. 8A ]

[ FIG. 8B ]

[ FIG. 9A ]

[ FIG. 9B ]

[ FIG. 10 ]

[ FIG. 11 ]

[ FIG. 12 ]

[ FIG. 13 ]

[ FIG. 14 ]

[ FIG. 15 ]

[ FIG. 16A ]

[ FIG. 16B ]

**EP 4 645 290 A1**



[ FIG. 16C ]

[ FIG. 16D ]

[ FIG. 17 ]

[ FIG. 18A ]

[ FIG. 18B ]

| DOWN(↓) TEMPERATURE d | Table | UP(↑) TEMPERATURE d |
|---|---|---|
| d < A | Table0 | d < A' |
| A ≤ d < B | Table1 | A ≤ d < B' |
| B ≤ d < C | Table2 | B ≤ d < C' |
| ⋮ | | ⋮ |
| J ≤ d | Table10 | |

[ FIG. 19 ]

```
                          ┌──────────┐
                          │  START   │
                          └────┬─────┘
                               │
         ┌─────────────────────┼──────────────────────────┐
         │                     │                           │
         │                     ▼                           │  S12
         │                                    ┌────────────┴──────────┐
         │              IS          S11       │ PERFORM ABNORMALITY   │
         │         INPUT SIGNAL  ◇──────── No  │ PROCESSING            │
         │           NORMAL?                   └───────────────────────┘
         │                  │
         │                 Yes
         │                  │
         │                  ▼              S13
         │         ┌──────────────────────┐
         │         │  READ TEMPERATURE    │
         │         └──────────┬───────────┘
         │                    │
         │                    ▼            S14
         │         ┌──────────────────────┐
         │         │  SELECT TABLE        │
         │         └──────────┬───────────┘
         │                    │
         │                    ▼            S15
         │         ┌──────────────────────┐
         │         │  DISPLAY             │
         │         └──────────┬───────────┘
         │                    │
                              ▼
                          ┌──────────┐
                          │   END    │
                          └──────────┘
```

[ FIG.20 ]

[ FIG. 21A ]

[ FIG. 21B ]

[ FIG. 22A ]

BRIGHT

DARK

[ FIG. 22B ]

A2

[ FIG. 22C ]

140

[ FIG. 23 ]

BATTERY → N1 → POWER SUPPLY CIRCUIT → TO 20, 10

SENSOR UNIT ⌒ 70

[ FIG. 24 ]

POWER OFF

POWER ON

POWER ON
PICTURE SIGNAL = ALL BLACK
(R, G, B=0, 0, 0)

STANDBY          ACTIVE

POWER OFF

PICTURE SIGNAL ≠ ALL BLACK
(R, G, B=0, 0, 0)

[ FIG. 25A ]

[ FIG. 25B ]

[ FIG. 26A ]

[ FIG. 26B ]

[ FIG. 27A ]

[ FIG. 27B ]

[ FIG. 28 ]

[ FIG. 29 ]

[ FIG. 30 ]

[ FIG. 31 ]

[ FIG. 32 ]

[ FIG. 33 ]

[ FIG. 34 ]

[ FIG. 35 ]

[ FIG. 36A ]

[ FIG. 36B ]

[ FIG. 37A ]

[ FIG. 37B ]

[ FIG. 37C ]

[ FIG. 38 ]

[ FIG. 39A ]

133 — METER INFORMATION

132a

132b

[ FIG. 39B ]

131

CAUTION

133 — METER INFORMATION

132a

132b

[ FIG. 40A ]

134 — Navi INFORMATION

135

[ FIG. 40B ]

136a

136b

[ FIG. 41 ]

```
                          ┌─────────────┐
                          │    START    │
                          └──────┬──────┘
                                 │
         ┌───────────────────────┘
         │                                        S32
         │                       ┌──────────────────────────────┐
         │                       │   PERFORM ABNORMALITY         │
         │                       │        PROCESSING             │
         │                       └──────────────────────────────┘
         │                                     ▲
         ▼         S31                         │
      ╱─────╲         No                       │
     ╱  IS   ╲────────────────────────────────┘
    ╱ INPUT   ╲
    ╲ SIGNAL  ╱
     ╲NORMAL?╱
      ╲─────╱
         │ Yes
         ▼        S33
  ┌──────────────────┐
  │ READ TEMPERATURE │
  └──────────────────┘
         │
         ▼        S34
  ┌──────────────────┐
  │  SELECT TABLE    │
  └──────────────────┘
         │
         ▼
      ╱─────╲  S35            ╱─────╲  S36                    S38
     ╱  IS   ╲    No        ╱  IS    ╲   No        ┌──────────────────┐
    ╱POWER EQ ╲────────────╱ THERE    ╲───────────▶│   UNIFORMLY      │
    ╲TO/LESS  ╱            ╲IMAGE WITH╱            │     ADJUST       │
     ╲ALLOW  ╱              ╲ HIGH    ╱            │   BRIGHTNESS     │
      ╲POWER?╱               ╲PRIORITY?╱           └──────────────────┘
      ╲─────╱                ╲─────╱
         │ Yes                  │ Yes
         │                      ▼        S37
         │               ┌──────────────┐
         │               │    ADJUST    │
         │               │  BRIGHTNESS  │
         │               └──────────────┘
         ▼        S39
  ┌──────────────┐
  │   DISPLAY    │
  └──────────────┘
         │
         ▼
  ┌──────────────┐
  │     END      │
  └──────────────┘
```

[ FIG. 42 ]

INTEGRATED CONTROL UNIT — 12050

12000

MICROCOMPUTER — 12051

SOUND/IMAGE OUTPUT SECTION — 12052

VEHICLE-MOUNTED NETWORK I/F — 12053

AUDIO SPEAKER — 12061

DISPLAY SECTION — 12062

INSTRUMENT PANEL — 12063

COMMUNICATION NETWORK — 12001

DRIVING SYSTEM CONTROL UNIT — 12010

BODY SYSTEM CONTROL UNIT — 12020

OUTSIDE-VEHICLE INFORMATION DETECTING UNIT — 12030

IMAGING SECTION — 12031

IN-VEHICLE INFORMATION DETECTING UNIT — 12040

DRIVER STATE DETECTING SECTION — 12041

[ FIG. 43 ]

## INTERNATIONAL SEARCH REPORT

| International application No. |
| --- |
| **PCT/JP2023/047289** |

| A. | CLASSIFICATION OF SUBJECT MATTER |
| --- | --- |

*G09F 9/302*(2006.01)i; *B60K 35/23*(2024.01)i; *G02B 27/01*(2006.01)i; *G09F 9/00*(2006.01)i; *G09F 9/33*(2006.01)i
FI:  G09F9/302 Z; B60K35/23; G02B27/01; G09F9/33; G09F9/00 359

According to International Patent Classification (IPC) or to both national classification and IPC

| B. | FIELDS SEARCHED |
| --- | --- |

Minimum documentation searched (classification system followed by classification symbols)

B60K35/23; G02B5/20-5/28; G02B27/00-30/60; G02F1/133-1/1334; G02F1/1339-1/1341; G02F1/1347; G06F3/14-3/153; G09F9/00-9/46; H05B33/00-33/28; H05B44/00; H05B45/60; H05K9/00; H10K50/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2012-189627 A (KABUSHIKI KAISHA TOSHIBA) 04 October 2012 (2012-10-04) paragraphs [0021]-[0028], [0032]-[0033], fig. 6 | 1-2, 5, 12-14 |
| Y | paragraphs [0021]-[0028], [0032]-[0033], fig. 6 | 6-11 |
| Y | JP 2020-98270 A (DENSO CORPORATION) 25 June 2020 (2020-06-25) paragraphs [0013]-[0066], [0073], fig. 1-4, 6 | 1, 3-4, 15-20 |
| Y | JP 2015-169851 A (SHINYOSHA KK) 28 September 2015 (2015-09-28) paragraph [0021] | 1, 3-4, 15-20 |
| Y | JP 2004-302218 A (MATSUSHITA ELECTRIC INDUSTRIAL CO., LTD.) 28 October 2004 (2004-10-28) paragraphs [0027]-[0030], fig. 1, 2 | 1, 3-4, 15-20 |
| Y | WO 2019/155510 A1 (MITSUBISHI ELECTRIC CORPORATION) 15 August 2019 (2019-08-15) paragraph [0021], fig. 1, 3 | 6-8 |

☑ Further documents are listed in the continuation of Box C.     ☑ See patent family annex.

| | |
| --- | --- |
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **17 January 2024** | **20 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2023/047289**

### C. DOCUMENTS CONSIDERED TO BE RELEVANT

| Category* | Citation of document, with indication, where appropriate, of the relevant passages | Relevant to claim No. |
|---|---|---|
| Y | WO 2018/207273 A1 (MITSUBISHI ELECTRIC CORPORATION) 15 November 2018 (2018-11-15) <br> paragraph [0022], fig. 1, 8 | 6-8 |
| Y | JP 2021-136208 A (CANON INC.) 13 September 2021 (2021-09-13) <br> paragraphs [0050]-[0051], [0067]-[0077], fig. 3 | 9-11 |
| Y | US 2015/0102980 A1 (PASCA, Andrei) 16 April 2015 (2015-04-16) <br> paragraphs [0030], [0035], fig. 5 | 17 |
| Y | US 2021/0316611 A1 (AUDI AG) 14 October 2021 (2021-10-14) <br> paragraphs [0065]-[0067], fig. 8-9 | 18 |
| Y | JP 2021-110894 A (NIPPON SEIKI CO., LTD.) 02 August 2021 (2021-08-02) <br> paragraph [0030], fig. 1, 2 | 19-20 |
| Y | JP 2019-196172 A (NIPPON SEIKI CO., LTD.) 14 November 2019 (2019-11-14) <br> paragraph [0119], fig. 1 | 20 |
| A | US 2020/0225903 A1 (COHEN, Noy) 16 July 2020 (2020-07-16) <br> entire text, all drawings | 1-20 |

Form PCT/ISA/210 (second sheet) (July 2022)

## INTERNATIONAL SEARCH REPORT
### Information on patent family members

International application No.

**PCT/JP2023/047289**

| Patent document cited in search report | | | Publication date (day/month/year) | Patent family member(s) | | | Publication date (day/month/year) |
|---|---|---|---|---|---|---|---|
| JP | 2012-189627 | A | 04 October 2012 | (Family: none) | | | |
| JP | 2020-98270 | A | 25 June 2020 | (Family: none) | | | |
| JP | 2015-169851 | A | 28 September 2015 | (Family: none) | | | |
| JP | 2004-302218 | A | 28 October 2004 | (Family: none) | | | |
| WO | 2019/155510 | A1 | 15 August 2019 | US | 2020/0380895 | A1 | |
| | | | | paragraph [0042], fig. 1, 3 | | | |
| | | | | EP | 3550544 | A1 | |
| WO | 2018/207273 | A1 | 15 November 2018 | US | 2020/0057594 | A1 | |
| | | | | paragraph [0034], fig. 1, 8 | | | |
| | | | | EP | 3624090 | A1 | |
| JP | 2021-136208 | A | 13 September 2021 | US | 2021/0014393 | A1 | |
| | | | | paragraphs [0063]-[0064], [0077]-[0088], fig. 3 | | | |
| | | | | EP | 3764400 | A2 | |
| | | | | EP | 3996144 | A1 | |
| | | | | CN | 112216806 | A | |
| US | 2015/0102980 | A1 | 16 April 2015 | EP | 2863115 | A1 | |
| US | 2021/0316611 | A1 | 14 October 2021 | WO | 2020/048733 | A1 | |
| | | | | CN | 112654912 | A | |
| JP | 2021-110894 | A | 02 August 2021 | (Family: none) | | | |
| JP | 2019-196172 | A | 14 November 2019 | (Family: none) | | | |
| US | 2020/0225903 | A1 | 16 July 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022130863 A
- JP 2022212774 A